# EUROPEAN PATENT APPLICATION

(11) **EP 4 319 056 A1**
(43) Date of publication of application: **07.02.2024**
(21) Application number: 22784107.9
(22) Date of filing: 07.04.2022
(51) Int. Cl.: H04L 12/00

(54) **COLLECTIVE COMMUNICATION METHOD AND COMMUNICATION APPARATUS**

(30) Priority: 09.04.2021 CN 202110387422
(71) Applicant: Huawei Technologies Co., Ltd., Shenzhen, Guangdong 518129 (CN)
(72) Inventor: WU, Tao, Shenzhen, Guangdong 518129 (CN); ZHENG, Hewen, Shenzhen, Guangdong 518129 (CN); HAN, Lei, Shenzhen, Guangdong 518129 (CN); YAN, Jian, Shenzhen, Guangdong 518129 (CN); JIANG, Youjun, Shenzhen, Guangdong 518129 (CN); GONG, Xiangyu, Shenzhen, Guangdong 518129 (CN)
(74) Representative: Huawei European IPR
(86) International application number: PCT/CN2022/085645
(87) International publication number: WO 2022/214041

(57) **Abstract**

This application relates to the field of communication technologies, and provides a collective communication method and a communication apparatus, to implement short-distance communication and save communication resources. The method includes: A first terminal device receives at least one second packet from a first network device, where the second packet includes information about a first process and information about a network device corresponding to the first process, the first process is used to execute a first task, and the information about the network device corresponding to the first process is information about a network device to which a terminal device including the first process belongs. The first terminal device determines a third packet based on the at least one second packet, where the third packet includes information about a target network device and information about all first processes that correspond to the target network device and that execute the first task, and the target network device is at least one of network devices corresponding to the first task. The first terminal device sends the third packet to the first network device.

## Description

This application claims priority to Chinese Patent Application No. 202110387422.9, filed with the China National Intellectual Property Administration on April 9, 2021 and entitled "COLLECTIVE COMMUNICATION METHOD AND COMMUNICATION APPARATUS", which is incorporated herein by reference in its entirety.

### TECHNICAL FIELD

This application relates to the field of communication technologies, and in particular, to a collective communication method and a communication apparatus.

### BACKGROUND

Collective communication is a communication mode in which all processes in a specific group participate. In a fat-tree networking architecture, for example, a child node of a second network device (for example, a core (spine) switch) includes a first network device (for example, an access (leaf) switch) and a third network device (for example, an access switch), and child nodes of the first network device and the third network device each include four terminal devices. One process is deployed on each terminal device. Different processes are deployed on different terminal devices. Different processes correspond to different ranks (ranks). To complete allreduce (allreduce) once, some collective communication algorithms (for example, a recursive doubling (recursive doubling) algorithm) require that each terminal device performs communication for three times with another terminal device, and a source terminal device and a destination terminal device involved in each time of communication are determined based on a process rank.

However, the source terminal device cannot sense a location of the destination terminal device in a network topology, so that there may be a phenomenon of communication across the second network device for a plurality of times. In this case, a communication path between the two terminal devices is long, and resource overheads are high.

### SUMMARY

Embodiments of this application provide a collective communication method and a communication apparatus, to definitely reduce a number of long communication paths and reduce resource overheads.

To achieve the foregoing objective, the following technical solutions are used in embodiments of this application.

According to a first aspect, an embodiment of this application provides a collective communication method. The method may be performed by a first terminal device, or may be performed by a chip used in a first terminal device. The following provides descriptions by using an example in which the method is performed by the first terminal device. The method includes: The first terminal device receives at least one second packet from a first network device. The second packet includes information about a first process and information about a network device corresponding to the first process. The first process is used to execute a first task. The information about the network device corresponding to the first process is information about a network device to which a terminal device including the first process belongs. Then, the first terminal device determines a third packet based on the at least one second packet. The third packet includes information about a target network device and information about all first processes that correspond to the target network device and that execute the first task. The target network device is at least one of network devices corresponding to the first task. Then, the first terminal device sends the third packet to the first network device.

In other words, the second packet received by the first terminal device carries both the information about the first process and the information about the network device corresponding to the first process. The first terminal device aggregates the second packet to obtain the third packet. Then, the first terminal device sends the third packet. The third packet includes at least information about one target network device and information about all first processes that correspond to the target network device and that execute the first task. Therefore, for terminal devices belonging to a same network device, each terminal device may learn of all first processes that correspond to the target network device and that execute the first task, to plan a communication path to implement short-distance communication, reduce a communication path across a second network device as much as possible, and reduce resource overheads. In addition, neither the first network device nor the first terminal device needs to support another protocol, and a Netloc library does not need to be deployed on the first terminal device, avoiding introduction of additional deployment of the Netloc library.

In a possible design, the target network device is all network devices corresponding to the first task. That the first terminal device determines a third packet based on the at least one second packet includes: When a number of the at least one second packet is a target value, the first terminal device determines the third packet based on the at least one second packet. The target value indicates a number of all terminal devices including the first process for executing the first task.

In other words, the first terminal device generates the third packet only when determining that the second packet is completely received, so that the third packet carries the information about all the first processes for executing the first task.

In a possible design, the target network device is one of the network devices corresponding to the first task. That the first terminal device determines a third packet based on the at least one second packet includes: When a number of the at least one second packet is a target value, the first terminal device determines the third packet based on a target packet in the at least one second packet. The target value indicates a number of all terminal devices including the first process for executing the first task. The target packet belongs to the at least one second packet, and carries information about a same target network device.

In other words, when determining that the second packet is completely received, the first terminal device generates the third packet based on the target packet that is in the second packet and that carries the information about the same target network device. In this case, one third packet carries information about all first processes that are deployed on a terminal device belonging to a specific target network device and that execute the first task.

In a possible design, the third packet further includes first information. The first information includes at least one number value. The number value is consistent in number with and in a one-to-one correspondence to the target network device. A first number value indicates a number of terminal devices that are in a terminal device set and that are deployed with the first process for executing the first task. The first number value is one of the at least one number value. The terminal device in the terminal device set belongs to a target network device corresponding to the first number value.

In other words, in the third packet, the first number value indicates a number of terminal devices that are in terminal devices belonging to a specific target network device and that are deployed with the first process.

In a possible design, the third packet further includes second information. The second information indicates that a type of the third packet is a notification packet. Therefore, the packet type of the third packet is indicated.

In a possible design, the second information includes a first field in the third packet. A value of the first field in the third packet is a first preset value.

In a possible design, the second packet further includes third information. The third information indicates that the second packet includes the information about the network device corresponding to the first process. Therefore, the first terminal device learns that the second packet carries the information about the network device corresponding to the first process.

In a possible design, the third information includes a second field in the second packet. A value of the second field in the second packet is a second preset value.

In a possible design, the second packet further includes fourth information. The fourth information indicates that a type of the second packet is a query packet. Therefore, the packet type of the second packet is indicated.

In a possible design, the fourth information includes a first field in the second packet. A value of the first field in the second packet is a third preset value.

In a possible design, the third packet satisfies a protocol format of remote direct memory access over converged Ethernet RoCE. In other words, the third packet may be transmitted in the protocol format of RoCE.

In a possible design, the second packet satisfies the protocol format of RoCE. In other words, the second packet may be transmitted in the protocol format of RoCE.

According to a second aspect, an embodiment of this application provides a collective communication method. The method may be performed by a first network device, or may be performed by a chip used in a first network device. The following provides descriptions by using an example in which the method is performed by the first network device. The method includes: The first network device sends at least one second packet to a first terminal device. The second packet includes information about a first process and information about a network device corresponding to the first process. The first process is used to execute a first task. The information about the network device corresponding to the first process is information about a network device to which a terminal device including the first process belongs. The first network device receives a third packet from the first terminal device. The third packet includes information about a target network device and information about all first processes that correspond to the target network device and that execute the first task. The target network device is at least one of network devices corresponding to the first task. The first network device sends the third packet to a target terminal device. The first process for executing the first task is deployed on the target terminal device. The target terminal device belongs to the target network device.

In other words, the second packet provided by the first network device to the first terminal device carries both the information about the first process and the information about the network device corresponding to the first process, so that the first terminal device generates the third packet. Then, the first network device receives the third packet from the first terminal device, and forwards the third packet to the corresponding target terminal device. The third packet includes at least information about one target network device and information about all first processes that correspond to the target network device and that execute the first task. Therefore, for terminal devices belonging to a same network device, each terminal device may learn of all first processes that correspond to the target network device and that execute the first task, to plan a communication path to implement short-distance communication, reduce a communication path across a second network device as much as possible, and reduce resource overheads. In addition, neither the first network device nor the first terminal device needs to support another protocol, and a Netloc library does not need to be deployed on the terminal device, avoiding introduction of additional deployment of the Netloc library.

In a possible design, the third packet further includes first information. The first information includes at least one number value. The number value is consistent in number with and in a one-to-one correspondence to the target network device. A first number value indicates a number of terminal devices that are in a terminal device set and that are deployed with the first process for executing the first task. The first number value is one of the at least one number value. The terminal device in the terminal device set belongs to a target network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, when the target network device includes the first network device, the collective communication method in this embodiment of this application further includes: The first network device receives a first packet from a second terminal device. The first packet includes the information about the first process. The second terminal device is the target terminal device. The first network device determines the second packet based on the first packet.

In other words, the second packet is generated by the first network device, that is, the first network device adds information about the first network device to the first packet, to generate the second packet.

In a possible design, that the first network device determines the second packet based on the first packet includes: The first network device determines the second packet based on the first packet when a preset condition is satisfied. The preset condition includes: A type of the first packet is a target type, and the first packet includes fifth information. The fifth information indicates that the first packet does not carry the information about the network device corresponding to the first process. The target type may be a query packet.

In other words, the first network device generates the second packet based on the first packet only when the first packet is of the target type and the first packet does not carry the information about the network device corresponding to the first process.

In a possible design, the fifth information includes a second field in the first packet. A value of the second field in the first packet is a fourth preset value.

In a possible design, the first packet further includes sixth information. The sixth information indicates that the type of the first packet is a query packet. Therefore, the packet type of the first packet is indicated.

In a possible design, the sixth information includes a first field in the first packet. A value of the first field in the first packet is a third preset value.

In a possible design, when the target network device includes the first network device, the collective communication method in this embodiment of this application further includes: The first network device receives the second packet from a second terminal device. The second terminal device is the target terminal device.

In other words, for the second terminal device belonging to the first network device, when the second terminal device has learned of the information about the network device corresponding to the first process, the first network device obtains the second packet from the second terminal device. The second packet carries both the information about the first process and the information about the network device corresponding to the first process. The first network device only needs to forward the second packet, and does not need to process the second packet.

In a possible design, when the target network device includes a third network device, the collective communication method in this embodiment of this application further includes: The first network device receives the second packet from the second network device. The third network element belongs to the second network device.

In other words, for a terminal device belonging to the third network device, when the terminal device has learned of the information about the network device (that is, the third network device) corresponding to the first process, the first network device obtains the second packet through the second network device. The second packet carries both the information about the first process and the information about the network device corresponding to the first process. The first network device only needs to forward the second packet, and does not need to process the second packet.

In a possible design, the second packet further includes third information. The third information indicates that the second packet includes the information about the network device corresponding to the first process, so that the first terminal device quickly learns whether the second packet carries the information about the network device.

In a possible design, the third information includes a second field in the second packet. A value of the second field in the second packet is a second preset value.

In a possible design, the second packet further includes fourth information. The fourth information indicates that a type of the second packet is a query packet. Therefore, the packet type of the second packet is indicated.

In a possible design, the fourth information includes a first field in the second packet. A value of the first field in the second packet is a third preset value.

In a possible design, the third packet satisfies a protocol format of remote direct memory access over converged Ethernet RoCE.

In a possible design, the second packet satisfies the protocol format of RoCE.

According to a third aspect, an embodiment of this application provides a collective communication method. The method may be performed by a third network device, or may be performed by a chip used in a third network device. The following provides descriptions by using an example in which the method is performed by the third network device. The method includes: The third network device sends at least one second packet to a second network device. The second packet includes information about a first process and information about the third network device. The first process is deployed on a third terminal device. The third terminal device belongs to the third network device. The first process is used to execute a first task. Then, the third network device receives a third packet from the second network device. The third packet includes at least the information about the third network device and information about all first processes that correspond to the third network device and that execute the first task. Then, the third network device sends the third packet to the third terminal device.

In other words, when the third terminal device belongs to the third network device, the first process is deployed on the third terminal device, the second packet provided by the third network device to the second network device carries both the information about the first process and the information about the third network device, so that a first terminal device generates the third packet. Then, the third network device further receives the third packet from the second network device, and forwards the third packet to the third terminal device. The third packet includes at least the information about the third network device and the information about all the first processes that correspond to the third network device and that execute the first task. Therefore, the third terminal device may learn of all the first processes that correspond to the third network device and that execute the first task, to plan a communication path to implement short-distance communication, reduce a communication path across the second network device as much as possible, and reduce resource overheads. In addition, in the foregoing process, if the first process is not deployed on a specific third terminal device, the third terminal device does not perform the foregoing steps, to avoid a waste of a transmission resource. In addition, the third network device, the second network device, and the third terminal device do not need to support another protocol, and a Netloc library does not need to be deployed on the third terminal device, avoiding introduction of additional deployment of the Netloc library.

In a possible design, the third packet further includes information about a target network device and information about all first processes that correspond to the target network device and that execute the first task. The target network device is all network devices, except the third network device, in network devices corresponding to the first task.

In other words, when the first process for executing the first task is deployed on another terminal device, in addition to the third terminal device, and the terminal devices belongs to another target network device, the third packet may further carry information about the another target network device and information about all first processes that correspond to the target network device and that execute the first task, so that the third terminal device learns of a distribution status of all first processes corresponding to the first task in a network topology.

In a possible design, the third packet further includes first information. The first information includes at least one number value. The number value is consistent in number with and in a one-to-one correspondence to the network devices corresponding to the first task. A first number value indicates a number of terminal devices that are in a terminal device set and that are deployed with the first process for executing the first task. The first number value is one of the at least one number value. The terminal device in the terminal device set belongs to a network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, the collective communication method in this embodiment of this application further includes: The third network device receives a first packet from the third terminal device. The first packet includes the information about the first process. Then, the third network device determines the second packet based on the first packet.

In other words, the second packet is generated by the third network device, that is, the third network device adds information about the third network device to the first packet, to generate the second packet.

In a possible design, that the third network device determines the second packet based on the first packet includes: The third network device determines the second packet based on the first packet when a preset condition is satisfied. The preset condition includes: A type of the first packet is a target type, and the first packet includes fifth information. The fifth information indicates that the first packet does not carry the information about the third network device.

In other words, the third network device generates the second packet based on the first packet only when the first packet is of the target type and the first packet does not carry the information about the third network device.

In a possible design, the fifth information includes a second field in the first packet. A value of the second field in the first packet is a fourth preset value.

In a possible design, the first packet further includes sixth information. The sixth information indicates that the type of the first packet is a query packet.

In a possible design, the sixth information includes a first field in the first packet. A value of the first field in the first packet is a third preset value.

In a possible design, the collective communication method in this embodiment of this application further includes: The third network device receives the second packet from the third terminal device. In other words, the third network device obtains the second packet from the third terminal device. The second packet carries both the information about the first process and the information about the third network device. The third network device only needs to forward the second packet, and does not need to process the second packet.

In a possible design, the second packet further includes third information. The third information indicates that the second packet includes the information about the third network device, so that the third network device quickly learns whether the second packet carries the information about the third network device.

In a possible design, the third information includes a second field in the second packet. A value of the second field in the second packet is a second preset value.

In a possible design, the second packet further includes fourth information. The fourth information indicates that a type of the second packet is a query packet.

In a possible design, the fourth information includes a first field in the second packet. A value of the first field in the second packet is a third preset value.

In a possible design, the third packet satisfies a protocol format of remote direct memory access over converged Ethernet RoCE. In other words, the third packet may be transmitted in the protocol format of RoCE.

In a possible design, the second packet satisfies the protocol format of RoCE. In other words, the second packet may be transmitted in the protocol format of RoCE.

According to a fourth aspect, an embodiment of this application provides a collective communication method. The method may be performed by a fourth terminal device, or may be performed by a chip used in a fourth terminal device. The following provides descriptions by using an example in which the method is performed by the fourth terminal device. The method includes: The fourth terminal device sends a first packet to a fourth network device. The first packet includes at least information about a first process. The first process is deployed on the fourth terminal device. The first process is used to execute a first task. Then, the fourth terminal device receives a third packet from the fourth network device. The third packet includes at least information about the fourth network device and information about all first processes that correspond to the fourth network device and that execute the first task.

In other words, when the fourth terminal device sends the first packet to the fourth network device, the first packet carries at least the information about the first process, so that the first terminal device aggregates the information about the first process, to generate the third packet. Then, the fourth terminal device receives the third packet from the fourth network device, to learn of at least the information about the fourth network device and the information about all the first processes that correspond to the fourth network device and that execute the first task. Therefore, the fourth terminal device plans a communication path, to implement short-distance communication, reduce a communication path across a second network device as much as possible, and reduce resource overheads. In addition, in the foregoing process, if the first process is not deployed on a specific fourth terminal device, the fourth terminal device does not perform the foregoing steps, to avoid a waste of a transmission resource. In addition, neither the fourth network device nor the fourth terminal device needs to support another protocol, and a Netloc library does not need to be deployed on the fourth terminal device, avoiding introduction of additional deployment of the Netloc library.

In a possible design, the third packet further includes information about a fifth network device and information about all first processes that correspond to the fifth network device and that execute the first task. The fifth network device is all network devices, except the fourth network device, in network devices corresponding to the first task.

In other words, in addition to the fourth terminal device, there is another first process deployed on a terminal device belonging to the fifth network device. In this case, the third packet may further carry the information about the fifth network device and the information about all the first processes that correspond to the fifth network device and that execute the first task, so that the fourth terminal device learns of a distribution status of all first processes corresponding to the first task in a network topology.

In a possible design, the third packet further includes first information. The first information includes at least one number value. The number value is consistent in number with and in a one-to-one correspondence to the network devices corresponding to the first task. A first number value indicates a number of terminal devices that are in a terminal device set and that are deployed with the first process for executing the first task. The first number value is one of the at least one number value. The terminal device in the terminal device set belongs to a network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, the first packet includes fifth information. The fifth information indicates that the first packet does not carry the information about the fourth network device.

In a possible design, the fifth information includes a second field in the first packet. A value of the second field in the first packet is a fourth preset value.

In a possible design, the first packet further includes the information about the fourth network device.

In a possible design, the first packet further includes sixth information. The sixth information indicates that a type of the first packet is a query packet.

In a possible design, the sixth information includes a first field in the first packet. A value of the first field in the first packet is a third preset value.

In a possible design, the third packet satisfies a protocol format of remote direct memory access over converged Ethernet RoCE. In other words, the third packet may be transmitted in the protocol format of RoCE.

In a possible design, the first packet satisfies the protocol format of RoCE. In other words, the first packet may be transmitted in the protocol format of RoCE.

According to a fifth aspect, an embodiment of this application provides a communication apparatus. The communication apparatus may be the first terminal device in the first aspect or any possible design of the first aspect, an apparatus disposed in the first terminal device, or a chip that implements a function of the first terminal device. The communication apparatus includes a corresponding module, unit, or means (means) for implementing the foregoing method. The module, the unit, or the means may be implemented by hardware, software, or corresponding software executed by hardware. The hardware or the software includes one or more modules or units corresponding to the foregoing function.

The communication apparatus includes a sending unit, a receiving unit, and a processing unit. The receiving unit is configured to receive at least one second packet from a first network device. The second packet includes information about a first process and information about a network device corresponding to the first process. The first process is used to execute a first task. The information about the network device corresponding to the first process is information about a network device to which a terminal device including the first process belongs. The processing unit is configured to determine a third packet based on the at least one second packet. The third packet includes information about a target network device and information about all first processes that correspond to the target network device and that execute the first task. The target network device is at least one of network devices corresponding to the first task. The sending unit is configured to send the third packet to the first network device.

In a possible design, the target network device is all network devices corresponding to the first task. The processing unit is specifically configured to: when a number of the at least one second packet is a target value, determine the third packet based on the at least one second packet. The target value indicates a number of all terminal devices including the first process for executing the first task.

In a possible design, the target network device is one of the network devices corresponding to the first task. The processing unit is specifically configured to: when a number of the at least one second packet is a target value, determine the third packet based on a target packet in the at least one second packet. The target value indicates a number of all terminal devices including the first process for executing the first task. The target packet belongs to the at least one second packet, and carries information about a same target network device.

In a possible design, the third packet further includes first information. The first information includes at least one number value. The number value is consistent in number with and in a one-to-one correspondence to the target network device. A first number value indicates a number of terminal devices that are in a terminal device set and that are deployed with the first process for executing the first task. The first number value is one of the at least one number value. The terminal device in the terminal device set belongs to a target network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, the second packet further includes third information. The third information indicates that the second packet includes the information about the network device corresponding to the first process.

In a possible design, the third information includes a second field in the second packet. A value of the second field in the second packet is a second preset value.

In a possible design, the second packet further includes fourth information. The fourth information indicates that a type of the second packet is a query packet.

In a possible design, the fourth information includes a first field in the second packet. A value of the first field in the second packet is a third preset value.

In a possible design, the third packet satisfies a protocol format of remote direct memory access over converged Ethernet RoCE.

In a possible design, the second packet satisfies the protocol format of RoCE.

According to a sixth aspect, an embodiment of this application provides a communication apparatus. The communication apparatus may be the first network device in the second aspect or any possible design of the second aspect, an apparatus disposed in the first network device, or a chip that implements a function of the first network device. The communication apparatus includes a corresponding module, unit, or means (means) for implementing the foregoing method. The module, the unit, or the means may be implemented by hardware, software, or corresponding software executed by hardware. The hardware or the software includes one or more modules or units corresponding to the foregoing function.

The communication apparatus includes a sending unit and a receiving unit. The sending unit is configured to send at least one second packet to a first terminal device. The second packet includes information about a first process and information about a network device corresponding to the first process. The first process is used to execute a first task. The information about the network device corresponding to the first process is information about a network device to which a terminal device including the first process belongs. The receiving unit is configured to receive a third packet from the first terminal device. The third packet includes information about a target network device and information about all first processes that correspond to the target network device and that execute the first task. The target network device is at least one of network devices corresponding to the first task. The sending unit is further configured to send the third packet to a target terminal device. The first process for executing the first task is deployed on the target terminal device. The target terminal device belongs to the target network device.

In a possible design, the third packet further includes first information. The first information includes at least one number value. The number value is consistent in number with and in a one-to-one correspondence to the target network device. A first number value indicates a number of terminal devices that are in a terminal device set and that are deployed with the first process for executing the first task. The first number value is one of the at least one number value. The terminal device in the terminal device set belongs to a target network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, when the target network device includes the first network device, the receiving unit is further configured to receive a first packet from a second terminal device. The first packet includes the information about the first process. The second terminal device is the target terminal device. The communication apparatus further includes a processing unit. The processing unit is configured to determine the second packet based on the first packet.

In a possible design, the processing unit is specifically configured to determine the second packet based on the first packet when a preset condition is satisfied. The preset condition includes: A type of the first packet is a target type, and the first packet includes fifth information. The fifth information indicates that the first packet does not carry the information about the network device corresponding to the first process.

In a possible design, the fifth information includes a second field in the first packet. A value of the second field in the first packet is a fourth preset value.

In a possible design, the first packet further includes sixth information. The sixth information indicates that the type of the first packet is a query packet.

In a possible design, the sixth information includes a first field in the first packet. A value of the first field in the first packet is a third preset value.

In a possible design, when the target network device includes the first network device, the receiving unit is further configured to receive the second packet from a second terminal device. The second terminal device is the target terminal device.

In a possible design, when the target network device includes a third network device, the receiving unit is further configured to receive the second packet from a second network device. The third network element belongs to the second network device.

In a possible design, the second packet further includes third information. The third information indicates that the second packet includes the information about the network device corresponding to the first process.

In a possible design, the third information includes a second field in the second packet. A value of the second field in the second packet is a second preset value.

In a possible design, the second packet further includes fourth information. The fourth information indicates that a type of the second packet is a query packet.

In a possible design, the fourth information includes a first field in the second packet. A value of the first field in the second packet is a third preset value.

In a possible design, the third packet satisfies a protocol format of remote direct memory access over converged Ethernet RoCE.

In a possible design, the second packet satisfies the protocol format of RoCE.

According to a seventh aspect, an embodiment of this application provides a communication apparatus. The communication apparatus may be the third network device in the third aspect or any possible design of the third aspect, an apparatus disposed in the third network device, or a chip that implements a function of the third network device. The communication apparatus includes a corresponding module, unit, or means (means) for implementing the foregoing method. The module, the unit, or the means may be implemented by hardware, software, or corresponding software executed by hardware. The hardware or the software includes one or more modules or units corresponding to the foregoing function.

The communication apparatus includes a sending unit and a receiving unit. The sending unit is configured to send at least one second packet to a second network device. The second packet includes information about a first process and information about the communication apparatus. The first process is deployed on a third terminal device. The third terminal device belongs to the communication apparatus. The first process is used to execute a first task. The receiving unit is configured to receive a third packet from the second network device. The third packet includes at least the information about the communication apparatus and information about all first processes that correspond to the communication apparatus and that execute the first task. The sending unit is further configured to send the third packet to the third terminal device.

In a possible design, the third packet further includes information about a target network device and information about all first processes that correspond to the target network device and that execute the first task. The target network device is all network devices, except the communication apparatus, in network devices corresponding to the first task.

In a possible design, the third packet further includes first information. The first information includes at least one number value. The number value is consistent in number with and in a one-to-one correspondence to the network devices corresponding to the first task. A first number value indicates a number of terminal devices that are in a terminal device set and that are deployed with the first process for executing the first task. The first number value is one of the at least one number value. The terminal device in the terminal device set belongs to a network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, the receiving unit is further configured to receive a first packet from the third terminal device. The first packet includes the information about the first process. The processing unit is further configured to determine the second packet based on the first packet.

In a possible design, the processing unit is specifically configured to determine the second packet based on the first packet when a preset condition is satisfied. The preset condition includes: A type of the first packet is a target type, and the first packet includes fifth information. The fifth information indicates that the first packet does not carry the information about the communication apparatus.

In a possible design, the fifth information includes a second field in the first packet. A value of the second field in the first packet is a fourth preset value.

In a possible design, the first packet further includes sixth information. The sixth information indicates that the type of the first packet is a query packet.

In a possible design, the sixth information includes a first field in the first packet. A value of the first field in the first packet is a third preset value.

In a possible design, the receiving unit is further configured to receive the second packet from the third terminal device.

In a possible design, the second packet further includes third information. The third information indicates that the second packet includes the information about the communication apparatus.

In a possible design, the third information includes a second field in the second packet. A value of the second field in the second packet is a second preset value.

In a possible design, the second packet further includes fourth information. The fourth information indicates that a type of the second packet is a query packet.

In a possible design, the fourth information includes a first field in the second packet. A value of the first field in the second packet is a third preset value.

In a possible design, the third packet satisfies a protocol format of remote direct memory access over converged Ethernet RoCE.

In a possible design, the second packet satisfies the protocol format of RoCE.

According to an eighth aspect, an embodiment of this application provides a communication apparatus. The communication apparatus may be the fourth terminal device in the fourth aspect or any possible design of the fourth aspect, an apparatus disposed in the fourth terminal device, or a chip that implements a function of the fourth terminal device. The communication apparatus includes a corresponding module, unit, or means (means) for implementing the foregoing method. The module, the unit, or the means may be implemented by hardware, software, or corresponding software executed by hardware. The hardware or the software includes one or more modules or units corresponding to the foregoing function.

The communication apparatus includes a sending unit, a receiving unit, and a processing unit. The sending unit is configured to send a first packet to a fourth network device. The first packet includes at least information about a first process. The first process is deployed on the communication apparatus. The first process is used to execute a first task. The receiving unit is configured to receive a third packet from the fourth network device. The third packet includes at least information about the fourth network device and information about all first processes that correspond to the fourth network device and that execute the first task. The processing unit is further configured to determine the first packet.

In a possible design, the third packet further includes information about a fifth network device and information about all first processes that correspond to the fifth network device and that execute the first task. The fifth network device is all network devices, except the fourth network device, in network devices corresponding to the first task.

In a possible design, the third packet further includes first information. The first information includes at least one number value. The number value is consistent in number with and in a one-to-one correspondence to the network devices corresponding to the first task. A first number value indicates a number of terminal devices that are in a terminal device set and that are deployed with the first process for executing the first task. The first number value is one of the at least one number value. The terminal device in the terminal device set belongs to a network device corresponding to the first number value.

In a possible design, the third packet further includes second information. The second information indicates that a type of the third packet is a notification packet.

In a possible design, the second information includes a first field in the third packet. A value of the first field in the third packet is a first preset value.

In a possible design, the first packet includes fifth information. The fifth information indicates that the first packet does not carry the information about the fourth network device.

In a possible design, the fifth information includes a second field in the first packet. A value of the second field in the first packet is a fourth preset value.

In a possible design, the first packet further includes the information about the fourth network device.

In a possible design, the first packet further includes sixth information. The sixth information indicates that a type of the first packet is a query packet.

In a possible design, the sixth information includes a first field in the first packet. A value of the first field in the first packet is a third preset value.

In a possible design, the third packet satisfies a protocol format of remote direct memory access over converged Ethernet RoCE.

In a possible design, the first packet satisfies the protocol format of RoCE.

According to a ninth aspect, an embodiment of this application provides a communication apparatus, including a processor and a memory. The memory is configured to store computer instructions. When the processor executes the instructions, the communication apparatus is enabled to perform the method performed by the first terminal device in any one of the foregoing aspects or any possible design of any one of the foregoing aspects. The communication apparatus may be the first terminal device in the first aspect or any possible design of the first aspect, or a chip that implements a function of the first terminal device.

According to a tenth aspect, an embodiment of this application provides a communication apparatus, including a processor. The processor is coupled to a memory, and is configured to read and execute instructions in the memory, so that the communication apparatus performs the method performed by the first terminal device in any one of the foregoing aspects or any possible design of any one of the foregoing aspects. The communication apparatus may be the first terminal device in the first aspect or any possible design of the first aspect, or a chip that implements a function of the first terminal device.

According to an eleventh aspect, an embodiment of this application provides a chip, including a logic circuit and an input/output interface. The input/output interface is configured to communicate with a module outside the chip. For example, the chip may be a chip that implements a function of the first terminal device in the first aspect or any possible design of the first aspect. The input/output interface outputs a third packet. The input/output interface inputs a second packet. The logic circuit is configured to run a computer program or instructions, to implement the method in the first aspect or any possible design of the first aspect.

According to a twelfth aspect, an embodiment of this application provides a communication apparatus, including a processor and a memory. The memory is configured to store computer instructions. When the processor executes the instructions, the communication apparatus is enabled to perform the method performed by the first network device in any one of the foregoing aspects or any possible design of any one of the foregoing aspects. The communication apparatus may be the first network device in the second aspect or any possible design of the second aspect, or a chip that implements a function of the first network device.

According to a thirteenth aspect, an embodiment of this application provides a communication apparatus, including a processor. The processor is coupled to a memory, and is configured to read and execute instructions in the memory, so that the communication apparatus performs the method performed by the first network device in any one of the foregoing aspects or any possible design of any one of the foregoing aspects. The communication apparatus may be the first network device in the second aspect or any possible design of the second aspect, or a chip that implements a function of the first network device.

According to a fourteenth aspect, an embodiment of this application provides a chip, including a logic circuit and an input/output interface. The input/output interface is configured to communicate with a module outside the chip. For example, the chip may be a chip that implements a function of the first network device in the second aspect or any possible design of the second aspect. The input/output interface outputs a second packet and a third packet. The input/output interface inputs the third packet. The logic circuit is configured to run a computer program or instructions, to implement the method in the second aspect or any possible design of the second aspect.

According to a fifteenth aspect, an embodiment of this application provides a communication apparatus, including a processor and a memory. The memory is configured to store computer instructions. When the processor executes the instructions, the communication apparatus is enabled to perform the method performed by the third network device in any one of the foregoing aspects or any possible design of any one of the foregoing aspects. The communication apparatus may be the third network device in the third aspect or any possible design of the third aspect, or a chip that implements a function of the third network device.

According to a sixteenth aspect, an embodiment of this application provides a communication apparatus, including a processor. The processor is coupled to a memory, and is configured to read and execute instructions in the memory, so that the communication apparatus performs the method performed by the third network device in any one of the foregoing aspects or any possible design of any one of the foregoing aspects. The communication apparatus may be the third network device in the third aspect or any possible design of the third aspect, or a chip that implements a function of the third network device.

According to a seventeenth aspect, an embodiment of this application provides a chip, including a logic circuit and an input/output interface. The input/output interface is configured to communicate with a module outside the chip. For example, the chip may be a chip that implements a function of the third network device in the third aspect or any possible design of the third aspect. The input/output interface outputs a second packet and a third packet. The input/output interface inputs the third packet. The logic circuit is configured to run a computer program or instructions, to implement the method in the third aspect or any possible design of the third aspect.

According to an eighteenth aspect, an embodiment of this application provides a communication apparatus, including a processor and a memory. The memory is configured to store computer instructions. When the processor executes the instructions, the communication apparatus is enabled to perform the method performed by the fourth terminal device in any one of the foregoing aspects or any possible design of any one of the foregoing aspects. The communication apparatus may be the fourth terminal device in the fourth aspect or any possible design of the fourth aspect, or a chip that implements a function of the fourth terminal device.

According to a nineteenth aspect, an embodiment of this application provides a communication apparatus, including a processor. The processor is coupled to a memory, and is configured to read and execute instructions in the memory, so that the communication apparatus performs the method performed by the fourth terminal device in any one of the foregoing aspects or any possible design of any one of the foregoing aspects. The communication apparatus may be the fourth terminal device in the fourth aspect or any possible design of the fourth aspect, or a chip that implements a function of the fourth terminal device.

According to a twentieth aspect, an embodiment of this application provides a chip, including a logic circuit and an input/output interface. The input/output interface is configured to communicate with a module outside the chip. For example, the chip may be a chip that implements a function of the fourth terminal device in the fourth aspect or any possible design of the fourth aspect. The input/output interface outputs a second packet and a third packet. The input/output interface inputs the third packet. The logic circuit is configured to run a computer program or instructions, to implement the method in the fourth aspect or any possible design of the fourth aspect.

According to a twenty-first aspect, an embodiment of this application provides a computer-readable storage medium. The computer-readable storage medium stores instructions. When the instructions are run on a computer, the computer is enabled to perform the collective communication method in any one of the foregoing aspects.

According to a twenty-second aspect, an embodiment of this application provides a computer program product including instructions. When the computer program product is run on a computer, the computer is enabled to perform the collective communication method in any one of the foregoing aspects.

According to a twenty-third aspect, an embodiment of this application provides a circuit system. The circuit system includes a processing circuit. The processing circuit is configured to perform the collective communication method in any one of the foregoing aspects.

According to a twenty-fourth aspect, an embodiment of this application provides a communication system. The communication system includes the terminal device and the network device in any one of the foregoing aspects.

For technical effects brought by any design of the fifth aspect to the twenty-fourth aspect, refer to beneficial effects in the corresponding methods provided above. Details are not described herein again.

### BRIEF DESCRIPTION OF DRAWINGS

FIG. 1a is a schematic diagram of distribution of communication paths in a network architecture according to an embodiment of this application;
FIG. 1b is another schematic diagram of distribution of communication paths in a network architecture according to an embodiment of this application;
FIG. 2a is a schematic flowchart of a collective communication method according to an embodiment of this application;
FIG. 2b is a schematic diagram of a structure of a packet according to an embodiment of this application;
FIG. 2c is a schematic diagram of a structure of yet another packet according to an embodiment of this application.
FIG. 3a is a schematic flowchart of yet another collective communication method according to an embodiment of this application;
FIG. 3b is a schematic diagram of a structure of still another packet according to an embodiment of this application;
FIG. 4a is a schematic flowchart of still another collective communication method according to an embodiment of this application;
FIG. 4b is a schematic diagram of a structure of still another packet according to an embodiment of this application;
FIG. 4c is a schematic diagram of a structure of still another packet according to an embodiment of this application;
FIG. 5 is a schematic diagram of a structure of a communication apparatus according to an embodiment of this application; and
FIG. 6 is a schematic diagram of a structure of yet another communication apparatus according to an embodiment of this application.

### DESCRIPTION OF EMBODIMENTS

The terms "first", "second", and the like in the specification and the accompanying drawings of this application are intended to distinguish between different objects, or are intended to distinguish between different processing of a same object, but are not intended to describe a particular order of objects. In addition, the terms "include" and "have" and any variant thereof in descriptions of this application are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. It should be noted that in embodiments of this application, the term such as "as an example" or "for example" is used to represent giving an example, an illustration, or a description. Any embodiment or design solution described as "an example" or "for example" in embodiments of this application should not be construed to be more preferential or advantageous than other embodiments or design solutions. To be precise, the term such as "as an example" or "for example" is intended to present a related concept in a specific manner. The term "a plurality of" mentioned in the descriptions of this application means two or more.

Technical terms used in embodiments of this application are first described.
1: Message passing interface (message passing interface, MPI)
   The MPI is a communication library for message passing between a plurality of processes. An application implements data transmission by invoking a communication interface defined in the MPI.
2: Collective communication, task, and process
   Collective communication is a communication mode of the MPI, specifically a communication mode in which all processes in a specific group participate. The specific group may be a set of processes that complete a specific task.

A task is a set of a group of processes that need to be executed to complete a specific computing service. A task is run through a group of processes on a node. There may be one or more nodes. Each group of processes may include one or more processes. One or more processes in a group of processes may be deployed on one node.

A process is used to complete a specific part of calculation of a specific task. In embodiments of this application, there are at least two processes used to execute a specific task. Different processes are identified by different ranks. For processes in a same communication domain, each process is assigned with a unique rank during initialization of the communication domain. When a task is run, a communication domain needs to be created. The communication domain includes a context (context), a process group (group), and the like. There may be one or more communication domains for one task, and one communication domain corresponds to one process group. A process group represents a set of all processes in a communication domain corresponding to the process group.

For distinguishing, for processes in a same communication domain, a node including a process corresponding to a rank 0 is referred to as a master node, and another node is referred to as a computing node. The master node and the computing node run a same task at the same time to implement parallel computing. It should be noted that in embodiments of this application, the node may also be replaced with a terminal device.

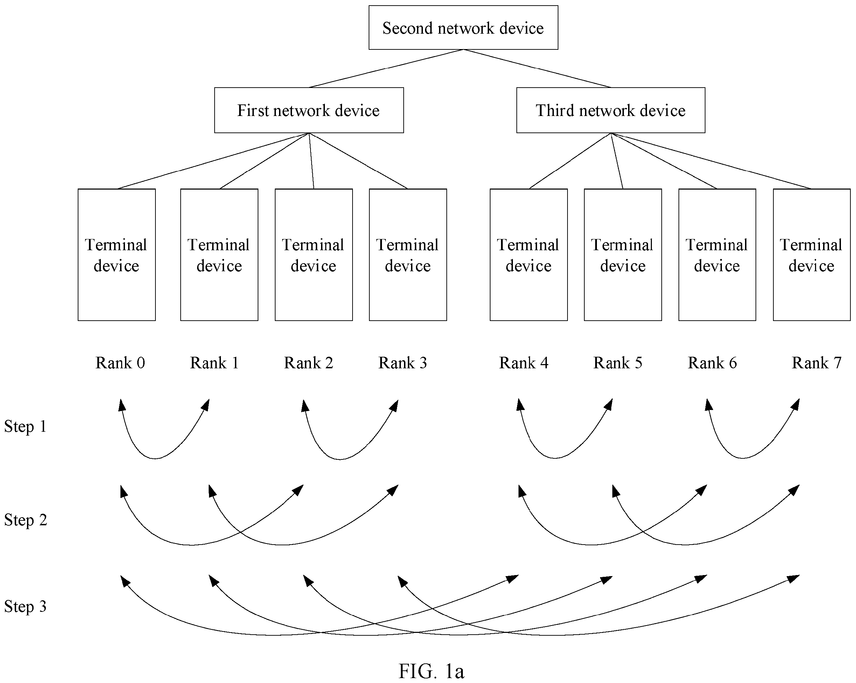

For example, FIG. 1a is a schematic diagram of a network architecture to which embodiments of this application are applied. The network architecture is merely used as an example, and should not be construed as a limitation on an application scenario of embodiments of this application. In a diagram of the network architecture of a communication domain shown in FIG. 1a, a child node of a second network device includes a first network device and a third network device. The second network device may be a core (spine) switch. Both the first network device and the third network device may be access (leaf) switches. There are four terminal devices belonging to the first network device. There are also four terminal devices belonging to the third network device. One process is deployed on one terminal device. Different processes are deployed on different terminal devices. Different processes correspond to different ranks. For a terminal device belonging to the first network device, a rank of a process deployed on the terminal device includes a rank 0, a rank 1, a rank 2, and a rank 3. For a terminal device belonging to the third network device, a rank of a process deployed on the terminal device includes a rank 4, a rank 5, a rank 6, and a rank 7.

It should be noted that network devices (such as the first network device, the second network device, and the third network device) in embodiments of this application are not limited to the switches mentioned above, and may be other devices such as a router. In embodiments of this application, the terminal device may also be described as a node. The terminal device mentioned in embodiments of this application may be a server or the like.

In addition, in embodiments of this application, "A belongs to B" means that A is a child node of B, and B is a parent node of A. For example, in FIG. 1a, there are four terminal devices belonging to the first network device. This may also be described as follows: There are four child nodes of the first network device. "B to which A belongs" also means that A is a child node of B, and B is a parent node of A. For another example, FIG. 1a is still used as an example. A terminal device including a process corresponding to the rank 0 is a child node of the first network device. In other words, a network device to which the terminal device (the terminal device deployed with the process corresponding to the rank 0) belongs is the first network device.

To complete allreduce (allreduce) once, some collective communication algorithms (for example, a recursive doubling (recursive doubling) algorithm) require that each terminal device performs communication for three times with another terminal device, and a source terminal device and a destination terminal device involved in each communication are determined based on a process rank. A curved arrow in FIG. 1a shows the source terminal device and the destination terminal device in each communication.

It should be noted that in the network architecture shown in FIG. 1a, only one communication domain of a specific task is used as an example for description. There may be one or more second network devices. FIG. 1a shows only one second network device. The second network device may include one or more child nodes. In FIG. 1a, only an example in which the second network device includes two child nodes is used for description. The first network device may include one or more child nodes. In FIG. 1a, only an example in which the first network device includes four child nodes is used for description. Similarly, the third network device may include one or more child nodes. In FIG. 1a, only an example in which the third network device includes four child nodes is used for description. A number of child nodes of the first network device may be the same as or different from a number of child nodes of the third network device. This is not limited in embodiments of this application.

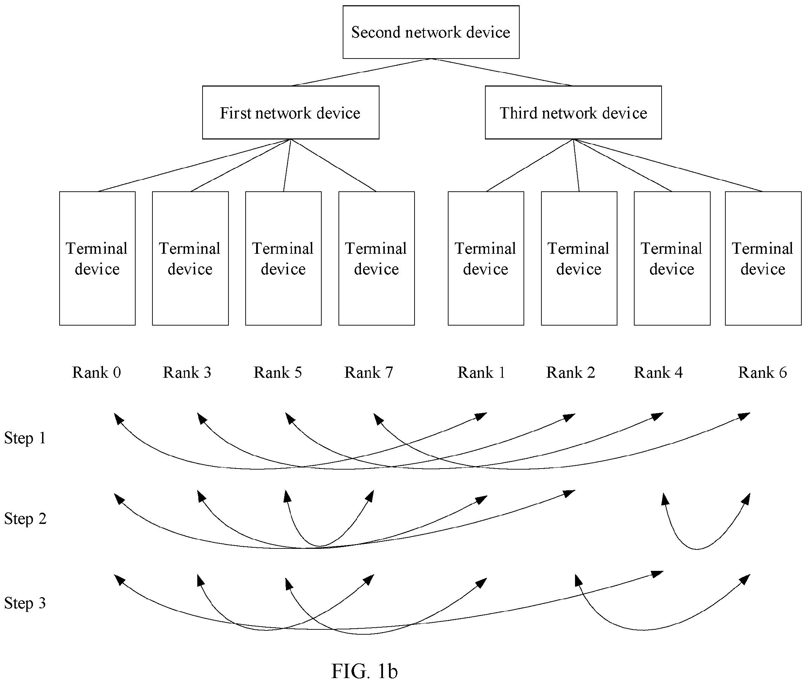

The source terminal device cannot sense a location of the destination terminal device in a network topology, so that there may be a phenomenon of communication across the second network device for a plurality of times. As shown in FIG. 1b, a number of times of communication across the second network device in three parallel communications is three. In FIG. 1a, a number of times of communication across the second network device in three parallel communications is one. In other words, a longer communication path across the second network device indicates higher communication overheads.

In an Ethernet networking environment, when the first network device, the third network device, and the terminal device all support the OpenFlow (open flow) protocol, and a portable network locality (portable network locality, Netloc) library is deployed on the terminal device, the terminal device can obtain a global network topology. Then, for a specific task, the terminal device performs application programming interface (application programming interface, API) query by using an MPI communication library, to obtain a location of a process for executing the task in the network topology, and then determines, with reference to a rank corresponding to each process, a communication path that matches the network topology. The global network topology is obtained through the following process.

The terminal device deployed with a process identified by the rank 0 is denoted as a terminal device 1. For the terminal device 1, the terminal device 1 obtains first topology information from the first network device. The first topology information includes a connection status between the first network device and the second network device, and a connection status between the first network device and a child node of the first network device. In addition, the terminal device 1 obtains third topology information from the third network device. The third topology information includes a connection status between the third network device and the second network device, and a connection status between the third network device and a child node of the third network device. The terminal device 1 may determine the global network topology based on the first topology information and the third topology information. For a terminal device deployed with a process identified by another rank, the foregoing process may be repeatedly performed to determine the global network topology.

It can be learned that the terminal device needs to support the OpenFlow protocol and needs to be deployed with a Netloc library, to obtain topology information. The network device also needs to support the OpenFlow protocol. In addition, topology information provided by each network device indicates a connection status between the network device and another device. Even if no process is deployed on a specific terminal device belonging to the network device, the network device still provides a connection status between the network device and the terminal device. As a result, a transmission resource is wasted.

It may be learned from the above that in a collective communication process, how to obtain a location of a process for executing a specific task in a network topology, reduce a long communication path (cross a plurality of network devices), and reduce resource overheads is a technical problem to be urgently resolved.

In view of this, an embodiment of this application provides a collective communication method. A location of a process for a specific task in a network topology can be accurately determined. This helps plan a communication path that matches the network topology, reduce a long communication path, and reduce resource overheads. For details about a network architecture to which the collective communication method in this embodiment of this application is applicable, refer to FIG. 1a and FIG. 1b. The network architecture and a service scenario described in embodiments of this application are intended to describe the technical solutions in embodiments of this application more clearly, and do not constitute any limitation on the technical solutions provided in embodiments of this application.

In this embodiment of this application, for example, in a communication domain, a terminal device deployed with a process identified by a rank 0 is described as a terminal device 1, and a network device to which the terminal device 1 belongs is described as a first network device. A task completed by the process identified by the rank 0 is described as a first task. The terminal device 1 may also be described as a master node. The following describes steps of a collective communication method 200 in this embodiment of this application.

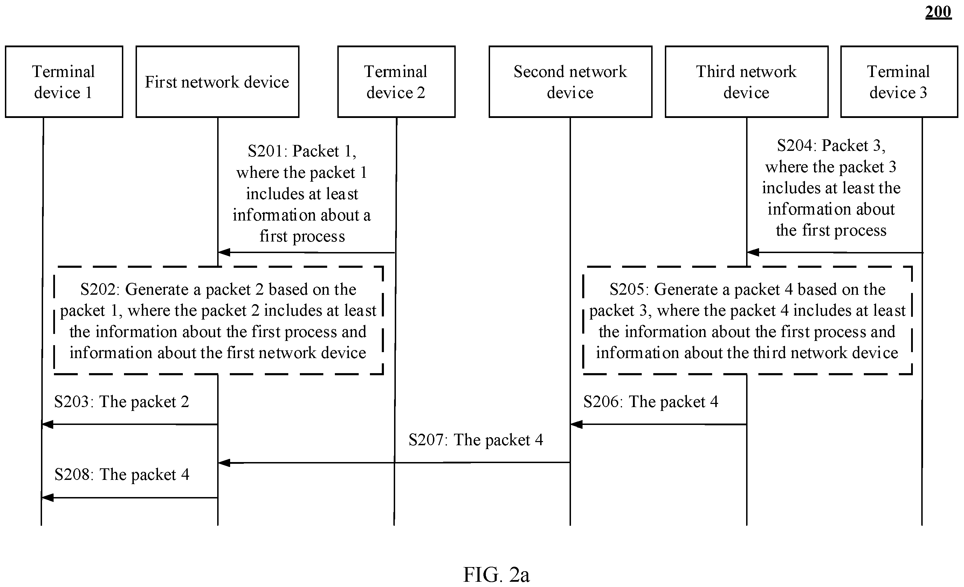

Phase 1: Report process information and network device information. In Phase 1, the process information is information about a first process deployed on a terminal device, and the network device information is information about a network device corresponding to the first process. The network device corresponding to the first process is a network device to which a terminal device deployed with the first process belongs in a communication domain. The following describes, with reference to FIG. 2a, this phase in two cases.

In a first case of Phase 1, in the communication domain, in addition to being distributed on the terminal device 1, the process for executing the first task is further distributed on another terminal device belonging to the first network device. The following uses one terminal device as an example to describe this case.

S201: A terminal device 2 sends a packet 1 to the first network device. Correspondingly, the first network device receives the packet 1 from the terminal device 2.

The terminal device 2 is described as follows: The terminal device 2 belongs to the first network device, and the first process is deployed on the terminal device 2. For example, refer to FIG. 1a. A rank of the process deployed on the terminal device 2 may be one of the following: a rank 1, a rank 2, or a rank 3. The terminal device 2 may also be referred to as a computing node.

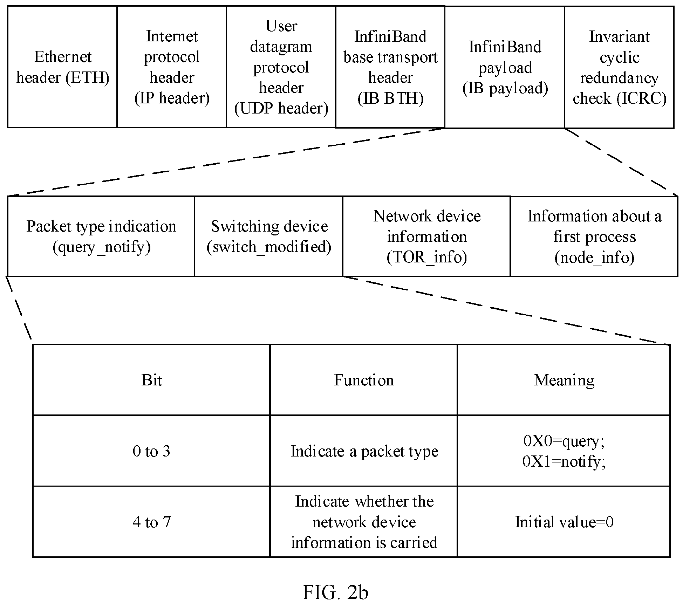

The packet 1 is described as follows: The packet 1 includes at least information about the first process, for example, a rank of the first process and an identifier of the first process. For example, FIG. 1a is still used as an example. When the rank of the process deployed on the terminal device 2 is 1, the information about the first process includes information "Rank 1". When the rank of the process deployed on the terminal device 2 is 2, the information about the first process includes information "Rank 2". When the rank of the process deployed on the terminal device 2 is 3, the information about the first process includes information "Rank 3". FIG. 2b is used as an example. The packet 1 uses four bytes (bytes, B) to carry the information about the first process, and the four bytes are denoted as node_info.

Other information in the packet 1 is described by using two examples.

Example 1: The packet 1 does not carry information about a network device (that is, the first network device in FIG. 1a) corresponding to the first process. In this example, the first network device in this embodiment of this application performs S202. For details, refer to related descriptions of S202. Details are not described herein again. The packet 1 may further includes at least one piece of the following information.

The first is information 1. The information 1 indicates that the packet 1 does not carry the information about the network device (that is, the first network device in FIG. 1a) corresponding to the first process. For example, the information 1 includes a field 1 in the packet 1. A value of the field 1 in the packet 1 is a preset value 1. The field 1 may be a switching device (switch_modified) field in the packet 1, as shown in FIG. 2b, or may be a field with another name. This is not limited in this embodiment of this application. The preset value 1 may be 0, or may be another value. This is not limited in this embodiment of this application. In FIG. 2b, the switching device field occupies bits 4 to 7 in an InfiniBand (infiniband, IB) payload (payload). When a value of the switching device field is 0, the packet 1 including the field does not carry the information about the network device corresponding to the first process.

The second is information 2. The information 2 indicates that a type of the packet 1 is a query (query) packet. For example, the information 2 includes a field 2 in the packet 1. A value of the field 2 in the packet 1 is a preset value 2. The field 2 may be a packet type indication field in the packet 1, for example, a field denoted as query_notify in FIG. 2b, or may be a field with another name. This is not limited in this embodiment of this application. The preset value 2 may be 0, or may be another value. This is not limited in this embodiment of this application. In FIG. 2b, the packet type indication field occupies bits 0 to 3 in the InfiniBand payload. When a value of the packet type indication field is 0, the packet 1 including the field is a query packet.

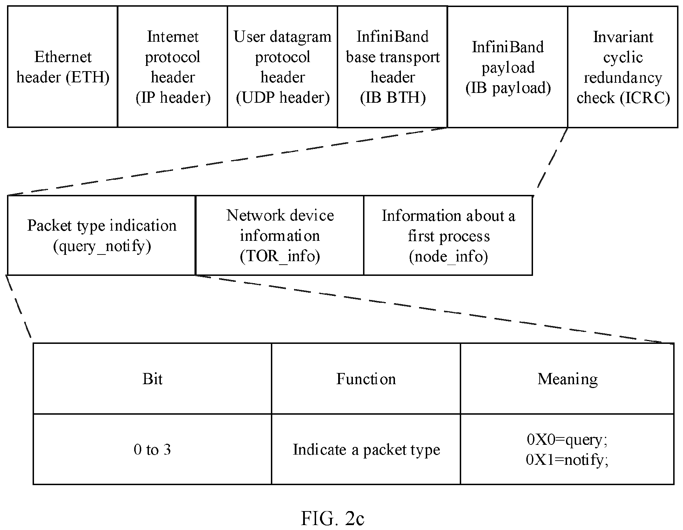

Example 2: The packet 1 carries information about a network device (that is, the first network device in FIG. 1a) corresponding to the first process. In this example, the first network device in this embodiment of this application does not need to perform S202, but only needs to perform S203. A packet 2 in S203 is the packet 1 in this example. For details, refer to related descriptions of S203. Details are not described herein again. The following describes information about the first network device carried in the packet 1: The information about the first network device is used to uniquely identify the first network device, and may include but is not limited to an IP address of the first network device and identification information of the first network device. FIG. 2c is used as an example. The packet 1 uses four bytes to carry the information about the first network device, and the four bytes are denoted as TOR_info. For example, in the packet 1, a field corresponding to TOR_info carries the IP address (for example, 192.168.2.1) of the first network device. In this example, the packet 1 does not include information 1 (for example, a field denoted as switch_modified), and may include information 2 (for example, a field denoted as query_notify), as shown in FIG. 2c. In addition, in this example, the terminal device 2 may obtain the information about the first network device in a plurality of manners. For example, the terminal device 2 obtains the information about the first network device in a process of establishing a communication connection between the terminal device 2 and the first network device. Certainly, the terminal device 2 may alternatively obtain the information about the first network device in another manner. This is not limited in this embodiment of this application.

It should be noted that, in the foregoing two examples, the packet 1 further includes another field. For example, refer to FIG. 2b. A remote direct memory access over converged Ethernet (RDMA over converged Ethernet, RoCE) version 2 network protocol is used as an example, the packet 1 further includes the following fields: an Ethernet header (Ethernet linker header, ETH), an Internet protocol (Internet protocol, IP) header, a user datagram protocol (user datagram protocol, UDP) header, an InfiniBand base transport header (infiniband base transport header, IB BTH), invariant cyclic redundancy check (invariant cyclic redundancy check, ICRC), and the like. ICRC is used to protect integrity of the packet. This is a mechanism that protects the integrity of the packet through cyclic redundancy check (cyclic redundancy check, CRC).

S202: The first network device generates a packet 2 based on the packet 1.

The packet 2 includes at least the information about the first process and the information about the first network device. For the information about the first process, refer to descriptions of S201. Details are not described herein again. For the information about the first network device, refer to related descriptions in Example 2 of S201. Details are not described herein again. FIG. 2b is used as an example. The packet 2 uses four bytes to carry the information about the first network device, and the four bytes are denoted as TOR_info. For example, in the packet 1 in Example 1 in S201, a field corresponding to TOR_info is 0, that is, the packet 1 does not carry the information about the first network device. The first network device encapsulates the IP address (for example, 192.168.2.1) of the first network device into the TOR_info field of the packet 1, to obtain the packet 2.

Optionally, when a preset condition is satisfied, the first network device generates the packet 2 based on the packet 1. The first preset condition includes the following two.

First: The type of the packet 1 is a target type. The target type may include but is not limited to a query packet. For example, when the packet 1 includes the information 2, the packet 1 is a query packet.

Second: The packet 1 includes the information 1. For descriptions of the information 1, refer to the descriptions of S201. Details are not described herein again.

On the contrary, when the preset condition is not satisfied, the first network device performs forwarding processing, and does not update the packet.

In this way, even if the first network device further receives another packet, the first network device can determine, based on the preset condition, which packets are to be processed, to obtain a second packet.

It should be noted that when the packet 1 is that in Example 1 in S201, the first network device performs S202, and when the packet 1 is that in Example 2 of S201, the first network device does not need to perform S202. When the first network device performs S202, if the packet 1 includes the information 1, the first network device further updates the information 1 to information 3. In other words, the packet 2 includes the information 3. The information 3 indicates that the packet 2 carries the information about the network device (that is, the first network device in FIG. 1a) corresponding to the first process. For example, the information 3 includes a field 1 in the packet 2. A value of the field 1 in the packet 2 is a preset value 3. The preset value 3 may be 1, provided that the preset value 3 is different from the preset value 1. When the packet 1 satisfies the RoCE V2 network protocol, in addition to updating two fields (for example, the field corresponding to switch_notified and the field corresponding to TOR_info in FIG. 2b), the first network device further updates a value of an ICRC field, to check integrity of data between an IP header and the ICRC field.

S203: The first network device sends the packet 2 to the terminal device 1. Correspondingly, the terminal device 1 receives the packet 2 from the first network device.

A rank of the process deployed on the terminal device 1 is 0. The terminal device 1 may also be referred to as a master node.

When the first network device performs S202, the packet 2 in S203 is the packet 2 in S202. When the first network device performs S202, the packet 2 in S203 is the packet 1 in Example 2 in S201.

According to the foregoing descriptions of S201 to S203, the terminal device 1 may obtain information about the process deployed on the terminal device 2 and the information about the first network device to which the terminal device 2 belongs. It should be noted that in the communication domain, in addition to the terminal device 1 and the terminal device 2, if another terminal device belongs to the first network device, and a process for executing the first task is deployed on the terminal device, the terminal device 1 also obtains information about the process deployed on the terminal device and the information about the first network device. For a specific implementation process, refer to the descriptions of S201 to S203. Details are not described herein again.

In a second case of Phase 1, in the communication domain, in addition to being distributed on the terminal device belonging to the first network device, the process for executing the first task is further distributed on a terminal device belonging to a third network device. The third network element belongs to the foregoing second network device. The following uses one terminal device as an example to describe this case.

S204: A terminal device 3 sends a packet 3 to the third network device. Correspondingly, the third network device receives the packet 3 from the terminal device 3.

The terminal device 3 is described as follows: The terminal device 3 belongs to the third network device, the first process is deployed on the terminal device 3, and the first process is used to execute the first task. For example, refer to FIG. 1a. A rank of the process deployed on the terminal device 3 may be one of the following: a rank 4, a rank 5, a rank 6, or a rank 7. The terminal device 3 may also be referred to as a computing node.

For descriptions of the packet 3, refer to related descriptions of the "packet 1" in S201. Details are not described herein again.

S205: The third network device generates a packet 4 based on the packet 3.

The packet 4 includes at least information about the first process and information about the third network device. For the information about the first process, refer to descriptions of S201. Details are not described herein again. The information about the third network device is used to uniquely identify the third network device. For example, an IP address of the third network device may be denoted as 192.168.1.1. For an implementation process of S205, refer to the descriptions of S202. Details are not described herein again.

S206: The third network device sends the packet 4 to the second network device. Correspondingly, the second network device receives the packet 4 from the third network device.

The third network element belongs to the second network device.

When the third network device performs S205, the packet 4 in S206 is the packet 4 in S205. When the third network device does not perform S205, the packet 4 in S206 is the packet 3 in Example 2 in S204.

S207: The second network device sends the packet 4 to the first network device. Correspondingly, the first network device receives the packet 4 from the second network device.

The packet 4 in S207 is the packet 4 in S206.

S208: The first network device sends the packet 4 to the terminal device 1. Correspondingly, the terminal device 1 receives the packet 4 from the first network device.

For descriptions of the terminal device 1, refer to related descriptions of S203. Details are not described herein again.

According to the foregoing descriptions of S204 to S208, the terminal device 1 may obtain information about the process deployed on the terminal device 3 and the information about the third network device to which the terminal device 3 belongs. It should be noted that in the communication domain, in addition to the terminal device 3, if another terminal device belongs to the third network device, and a process for executing the first task is deployed on the terminal device, the terminal device also reports, to the terminal device 1, information about the process deployed on the terminal device and the information about the third network device. For a specific implementation process, refer to the descriptions of S204 to S208. Details are not described herein again.

Phase 2: Distribute process information and network device information. In Phase 2, the process information is information about all first processes that correspond to a target network device and that execute the first task, and the network device information is information about the target network device. The target network device is at least one of network devices corresponding to the first task. The network device corresponding to the first task is a network device to which a terminal device deployed with the first process belongs in a communication domain of the first task. The first process is used to execute the first task. FIG. 1a is used as an example. The network devices corresponding to the first task include the first network device and the third network device. The following describes this phase in two possible designs.

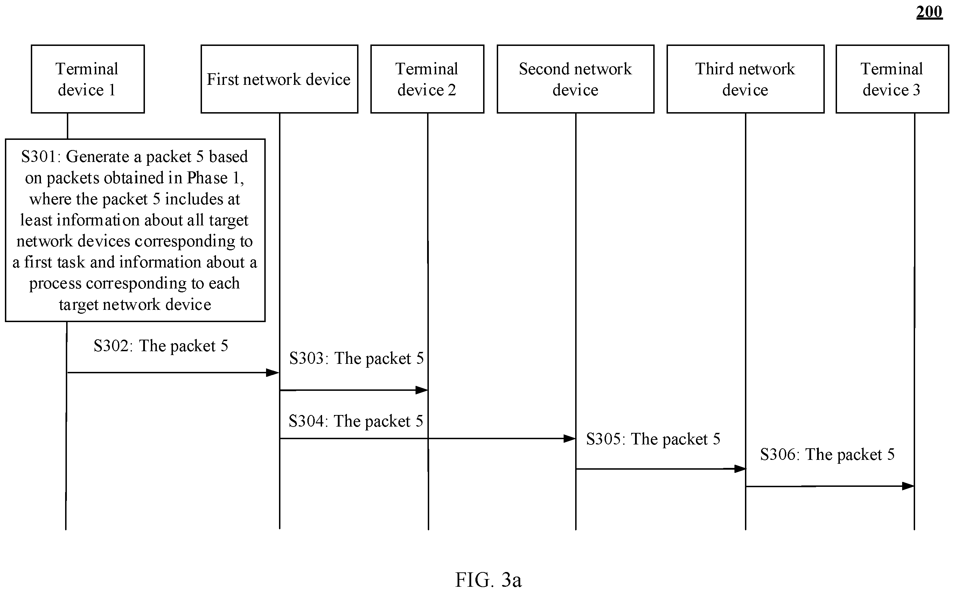

In a first possible design, in the communication domain, a task is used as a granularity, and a first terminal device distributes information about all target network devices corresponding to the first task in the communication domain and information about all processes that correspond to each target network device and that execute the first task. Refer to FIG. 3a. Steps in this embodiment of this application are as follows.

S301: The terminal device 1 generates a packet 5 based on the packets obtained in Phase 1.

The packets obtained in Phase 1 include the packet 2 and the packet 4.

The packet 5 includes at least the information about all the target network devices corresponding to the first task in the communication domain and information about all first processes that correspond to each target network device and that execute the first task.

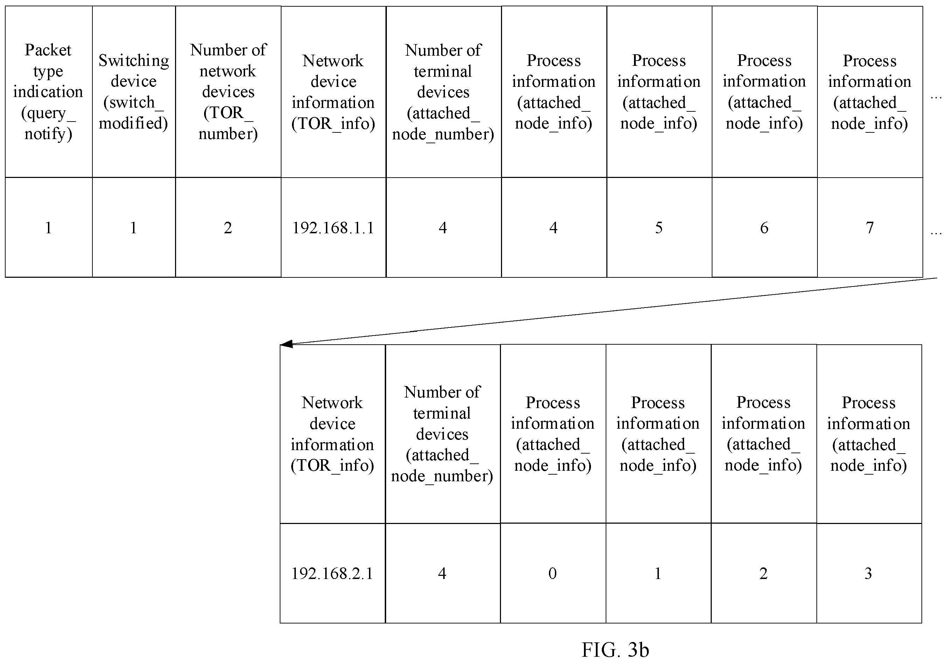

For example, FIG. 3b shows some fields of the packet 5. A field carrying the information about the target network device is denoted as TOR_info. The network architecture shown in FIG. 1b is used as an example. All target network devices corresponding to the first task in the communication domain include the first network device and the third network device. The TOR_info field includes the information about the first network device (that is, 192.168.2.1) and the information about the third network device (that is, 192.168.1.1). A field carrying the process information is denoted as attached_node_info. The network architecture shown in FIG. 1b is still used as an example. In the communication domain, information about all first processes that correspond to the first network device and that execute the first task includes the rank 0, the rank 1, the rank 2, and the rank 3. Information about all first processes that correspond to the third network device and that execute the first task includes the rank 4, the rank 5, the rank 6, and the rank 7.

Optionally, the packet 5 further includes at least one piece of the following information.

The first is information 4. The information 4 includes at least one number value. The number value is consistent in number with and in a one-to-one correspondence to the target network devices corresponding to the first network. A first number value is used as an example for detailed description. The first number value is one of the at least one number value. The first number value indicates a number of terminal devices that are in a terminal device set and that are deployed with the first process for executing the first task. The terminal device in the terminal device set belongs to a target network device corresponding to the first number value. In a single-core scenario, the first number value is consistent with a number of first processes in the terminal device set. When the at least one number value further includes another number value, for descriptions of the another number value, refer to descriptions of the first number value. Details are not described herein again.

For example, refer to FIG. 3b. The information 4 is a "number of terminal devices" field in the packet 5, and is denoted as attached_node_number. A number value 4 after 192.168.1.1 corresponds to the third network device identified by 192.168.1.1, and the number value 4 indicates that the first process for executing the first task is deployed on four terminal devices in terminal devices belonging to the third network device. A number value 4 after 192.168.2.1 corresponds to the first network device identified by 192.168.2.1, and the number value 4 indicates that the first process for executing the first task is deployed on four terminal devices in terminal devices belonging to the first network device.

The second is information 5. The information 5 indicates that a type of the packet 5 is a notification (notify) packet. For example, the information 5 includes a field 2 in the packet 5. A value of the field 2 in the packet 5 is a preset value 4. The field 2 may be a packet type indication field in the packet 5, or may be a field with another name. For descriptions of the field 2, refer to related descriptions of S201. Details are not described herein again. The preset value 4 may be 1, or may be another value, provided that the preset value 4 is different from the preset value 2. For example, refer to FIG. 3b. The information 5 is the packet type indication field in the packet 5, and is denoted as query_notify. A value of the query _notify field is 1, to indicate that the packet 5 including the field is a notification packet.

The third is information 6. The information 6 indicates that the packet 5 carries the information about the target network devices corresponding to the first task in the communication domain. For example, the information 6 includes a field 1 in the packet 5. A value of the field 1 in the packet 5 is a preset value 3. For descriptions of the field 1 and the preset value 3, refer to related descriptions of S202. Details are not described herein again. For example, refer to FIG. 3b. The information 6 is a packet type indication field in the packet 5, and is denoted as query_notify. A value of the query _notify field is 1, to indicate that the packet 5 including the field is a notification packet.

The fourth is information 7. The information 7 indicates a number of target network devices corresponding to the first task in the communication domain. For example, refer to FIG. 3b. The information 7 is a "number of network devices" field in the packet 5, and is denoted as TOR_number. The network architecture shown in FIG. 1b is still used as an example. A value of the TOR_number field is 2, to indicate that the number of target network devices corresponding to the first task in the communication domain is 2.

In some embodiments, when a number of packets obtained in Phase 1 is a target value, the terminal device 1 generates the packet 5 based on the packets obtained in Phase 1. The target value indicates a number of all terminal devices including the process for executing the first task in the communication domain. The process identified by the rank 0 is deployed on the terminal device 1, so that the number of all terminal devices that execute the first task in the communication domain can be obtained, that is, the terminal device 1 can know the target value.

For example, the network architecture shown in FIG. 1a is still used as an example. When the first process is deployed on eight terminal devices, the target value is 8. After the terminal device 1 determines that eight packets are obtained (that is, eight packets are obtained in Phase 1), the terminal device 1 generates the packet 5 based on the obtained eight packets. The packet 5 carries information about the first process in the eight packets and information about a network device corresponding to the first task in the communication domain in the eight packets, to avoid omission of process information and network device information.

It should be noted that in the network architecture shown in FIG. 1a, even if quality of communication between devices (for example, between the first network device and the terminal device 1) deteriorates, and there is a retransmission phenomenon, for example, the packet 2 in S203 is retransmitted, or the packet 4 in S208 is retransmitted, the terminal device 1 can identify a retransmitted packet, and the terminal device 1 can further determine which packet is retransmitted. In this case, if a specific packet is retransmitted, the terminal device 1 determines that the retransmitted packet is invalid, and statistics on a number of the foregoing packets are not affected.

S302: The terminal device 1 sends the packet 5 to the first network device. Correspondingly, the first network device receives the packet 5 from the terminal device 2.

For descriptions of the packet 5, refer to related descriptions of S301. Details are not described herein again.

In a first case of the first possible design, in the communication domain, in addition to being distributed on the terminal device 1, the process for executing the first task is further distributed on another terminal device belonging to the first network device. The following uses one terminal device as an example to describe this case.

S303: The first network device sends the packet 5 to the terminal device 2. Correspondingly, the terminal device 2 receives the packet 5 from the first network device.

For example, the first network device determines that the packet 5 does not satisfy the preset condition, and the first network device performs forwarding processing, that is, sends the packet 5 to the terminal device 2. For descriptions of the preset condition, refer to descriptions of S202. Details are not described herein again.

According to the foregoing descriptions of S301 to S303, the terminal device 2 may obtain the information about all the target network devices corresponding to the first task in the communication domain and the information about all the first processes that correspond to each target network device and that execute the first task. It should be noted that in the communication domain, in addition to the terminal device 1 and the terminal device 2, if another terminal device belongs to the first network device, and the process for executing the first task is deployed on the terminal device, the first network device also sends the packet 5 to the terminal device. Details are not described herein again.

In a second case of the first possible design, in the communication domain, in addition to being distributed on the terminal device belonging to the first network device, the process for executing the first task is further distributed on a terminal device belonging to the third network device. The third network element belongs to the second network device. The following uses one terminal device as an example to describe this case.

S304: The first network device sends a packet 5 to the second network device. Correspondingly, the second network device receives the packet 5 from the first network device.

A child node of the second network device includes the third network element.

For example, the first network device determines that the packet 5 does not satisfy the preset condition, and the first network device performs forwarding processing, that is, sends the packet 5 to the second network device. For descriptions of the preset condition, refer to descriptions of S202. Details are not described herein again.

S305: The second network device sends the packet 5 to the third network device. Correspondingly, the third network device receives the packet 5 from the second network device.

For example, the second network device determines that the packet 5 does not satisfy the preset condition, and the second network device performs forwarding processing, that is, sends the packet 5 to the third network device. For descriptions of the preset condition, refer to descriptions of S202. Details are not described herein again.

S306: The third network device sends the packet 5 to the terminal device 3. Correspondingly, the terminal device 3 receives the packet 5 from the third network device.

For descriptions of the terminal device 3, refer to related descriptions of S204. Details are not described herein again.

For example, the third network device determines that the packet 5 does not satisfy the preset condition, and the third network device performs forwarding processing, that is, sends the packet 5 to the terminal device 3. For descriptions of the preset condition, refer to descriptions of S202. Details are not described herein again.

In the communication domain, according to the foregoing descriptions of S301, S302, S304, S305, and S306, the terminal device 3 may obtain the information about all the target network devices corresponding to the first task in the communication domain and the information about all the first processes that correspond to each target network device and that execute the first task. It should be noted that in addition to the terminal device 3, if another terminal device belongs to the third network device, and the process for executing the first task is deployed on the terminal device, the third network device also sends the packet 5 to the terminal device. Details are not described herein again. Similarly, in addition to the third network device, if a terminal device belongs to another network device, and the process for executing the first task is deployed on the terminal device, the second network device also sends the packet 5 to the network device, and the terminal device sends the packet 5. Details are not described herein again.

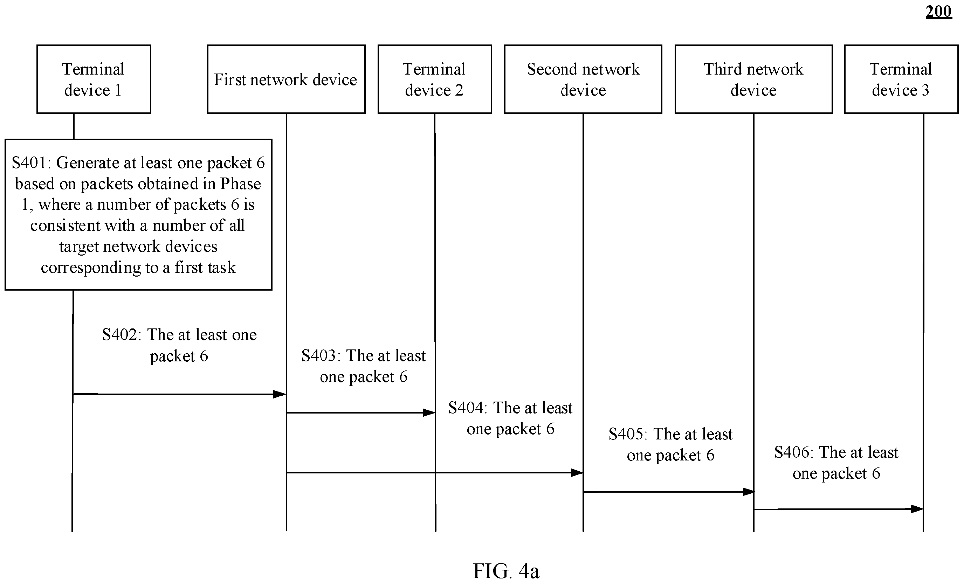

In a second possible design, in the communication domain, a network device is used as a granularity, and a first terminal device distributes information about one target network device corresponding to the first task and information about all processes that correspond to the target network device and that execute the first task. Refer to FIG. 4a. Steps in this embodiment of this application are as follows.

S401: The terminal device 1 generates at least one packet 6 based on the packets obtained in Phase 1.

The packets obtained in Phase 1 include the packet 2 and the packet 4.

A number of packets 6 is consistent with a number of all target network devices corresponding to the first task in the communication domain. One packet 6 includes information about one target network device and information about all first processes that correspond to the target network device and that execute the first task. Target network devices in different packets 6 are different.

Optionally, each packet 6 includes at least one piece of the following information: information 4, information 5, information 6, and information 7. For descriptions of the information 4 to the information 7, refer to related descriptions of S301. Details are not described herein again.

In some embodiments, when a number of packets obtained in Phase 1 is a target value, the terminal device 1 generates the at least one packet 6 based on a target packet in the packets obtained in Phase 1. For descriptions of the target value, refer to descriptions of S301. Details are not described herein again. The target packet is a packet obtained in Phase 1, and carries information about a same target network device.

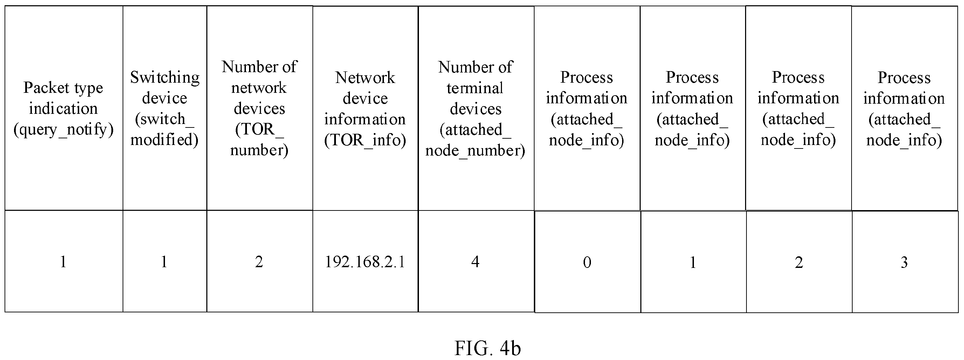

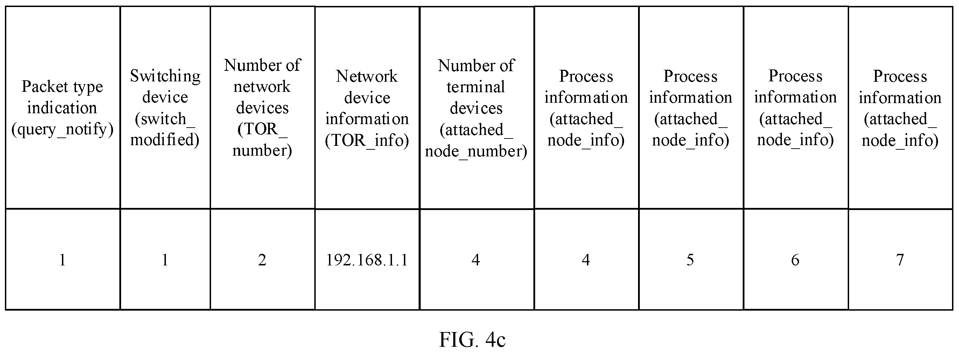

For example, the network architecture shown in FIG. 1a is still used as an example. When the first process is deployed on eight terminal devices, the target value is 8. After the terminal device 1 determines that eight packets are obtained (that is, eight packets are obtained in Phase 1), the terminal device 1 determines that four packets carry the information about the first network device, and the terminal device 1 generates one packet 6 based on the four packets, which may be denoted as a packet 6a. The packet 6a carries the information about the first network device and information about four first processes corresponding to the first network device, as shown in FIG. 4b. The terminal device 1 determines that four packets carry the information about the third network device, and the terminal device 1 generates another packet 6 based on the four packets, which may be denoted as a packet 6b. The packet 6b carries the information about the third network device and information about four first processes corresponding to the third network device, as shown in FIG. 4c.

S402: The terminal device 1 sends the at least one packet 6 to the first network device. Correspondingly, the first network device receives the at least one packet 6 from the terminal device 2.

A number of packets 6 is consistent with a number of all target network devices corresponding to the first task in the communication domain. One packet 6 includes information about one target network device and information about all first processes that correspond to the target network device and that execute the first task. Target network devices in different packets 6 are different.

For example, the network architecture shown in FIG. 1a is still used as an example. In S402, the packet 6 sent by the terminal device 1 to the first network device includes the packet 6a (as shown in FIG. 4b) and the packet 6b (as shown in FIG. 4c).

In a first case of the second possible design, in the communication domain, in addition to being distributed on the terminal device 1, the process for executing the first task is further distributed on another terminal device belonging to the first network device. The following uses one terminal device as an example to describe this case.

S403: The first network device sends the packet 6 to the terminal device 2. Correspondingly, the terminal device 2 receives the packet 6 from the first network device.

The packet 6 sent by the first network device to the terminal device 2 includes the information about the first network device and the information about all the first processes that correspond to the first network device and that execute the first task, that is, the packet 6a, as shown in FIG. 4b.

For example, the first network device determines that the packet 6a does not satisfy the preset condition, and the first network device performs forwarding processing, that is, sends the packet 6a to the terminal device 2. For descriptions of the preset condition, refer to descriptions of S202. Details are not described herein again.

According to the foregoing descriptions of S401 to S403, the terminal device 2 may obtain the information about the first network device and the information about all the first processes that correspond to the first network device and that execute the first task. It should be noted that in the communication domain, in addition to the terminal device 1 and the terminal device 2, if another terminal device belongs to the first network device, and the process for executing the first task is deployed on the terminal device, the first network device also sends the packet 6 to the terminal device. Details are not described herein again.

In a second case of the second possible design, in the communication domain, in addition to being distributed on the terminal device belonging to the first network device, the process for executing the first task is further distributed on a terminal device belonging to the third network device. The following uses one terminal device as an example to describe this case.

S404: The first network device sends the at least one packet 6 to the second network device. Correspondingly, the second network device receives the at least one packet 6 from the first network device.

In child nodes of the second network device, if the first process for executing the first task is deployed only on a terminal device belonging to the third network device, for example, the network architecture shown in FIG. 1a, a number of packets 6 in S404 may be one. When the child nodes of the second network device further include a fourth network device (not shown in FIG. 1a), if a terminal device belongs to the fourth network device, and the first process for executing the first task is deployed on the terminal device, the number of packets 6 in S404 is at least two. In other words, the number of packets 6 in S404 is related to a number of target network devices belonging to the second network device.

For example, the network architecture shown in FIG. 1b is still used as an example. The packet 6 sent by the first network device to the second network device includes the information about the third network device and process information corresponding to the third network device, that is, the packet 6b, as shown in FIG. 4c.

S405: The second network device sends the packet 6 to the third network device. Correspondingly, the third network device receives the packet 6 from the second network device.

For example, the network architecture shown in FIG. 1b is still used as an example. The packet 6 sent by the second network device to the third network device includes the information about the third network device and the process information corresponding to the third network device, that is, the packet 6b, as shown in FIG. 4c.

S406: The third network device sends the packet 6 to the terminal device 3. Correspondingly, the terminal device 3 receives the packet 6 from the third network device.

For example, the network architecture shown in FIG. 1b is still used as an example. The packet 6 sent by the third network device to the terminal device 3 includes the information about the third network device and the process information corresponding to the third network device, that is, the packet 6b, as shown in FIG. 4c.

According to the foregoing descriptions of S401, S402, S404, S405, and S406, the terminal device 3 may obtain the information about all the first processes that correspond to the third network device and that execute the first task. It should be noted that in the communication domain, in addition to the terminal device 3, if another terminal device belongs to the third network device, and the process for executing the first task is deployed on the terminal device, the third network device also sends the packet 6 to the terminal device. Details are not described herein again. Similarly, in the communication domain, in addition to the third network device, if a terminal device belongs to another network device, and the process for executing the first task is deployed on the terminal device, the second network device also sends the packet 6 to the network device, to send the packet 6 to the corresponding terminal device through the network device. Details are not described herein again.

It should be noted that the foregoing descriptions are provided by using an example in which one process is allocated to one terminal device. When a plurality of processes are allocated to one terminal device, for a terminal device to which a plurality of processes are allocated, the terminal device selects, according to a specific rule, one of the plurality of processes allocated to the terminal device as a target process corresponding to the terminal device, and adds information about the target process to a sent packet 1. For a process of transmitting the packet 1 between network devices, refer to the foregoing descriptions. Details are not described herein again. After obtaining a packet from a network device, a network interface card of the terminal device distributes the packet to a processor that executes each process, so that each processor learns of a location of a process for executing the first task in the network topology.

In addition, the foregoing descriptions are provided by using a communication domain as a granularity. When the first task corresponds to two or more communication domains, for an execution process of each communication domain, refer to the descriptions of the foregoing two phases. Details are not described herein again.

In the collective communication method in this embodiment of this application, the packet received by the terminal device 1 carries both the information about the first process and the information about the network device corresponding to the first process. Then, the terminal device 1 generates the packet 5 or the packet 6 based on the received packet (for example, the packet 2 and the packet 4). Both the packet 5 and the packet 6 include at least information about one target network device and information about all first processes that correspond to the target network device and that execute the first task. The generated packet is sent to the corresponding target network device, so that a terminal device belonging to the target network device can obtain the packet generated by the terminal device 1. In this way, for terminal devices belonging to a same network device, each terminal device may learn of information about the network device to which the terminal device belongs and information about all first processes that correspond to the network device to which the terminal belongs and that execute the first task. Therefore, a communication path is planned, to implement short-distance communication, reduce a communication path across three network devices as much as possible, and reduce resource overheads. In addition, in the foregoing process, if the first process is not deployed on a specific terminal device, the terminal device does not perform the foregoing steps, to avoid a waste of a transmission resource. In addition, neither the network device nor the terminal device needs to support another protocol, and a Netloc library does not need to be deployed on the terminal device, avoiding introduction of additional deployment of the Netloc library.

The foregoing mainly describes the solutions provided in embodiments of this application from a perspective of interaction between network elements. Correspondingly, an embodiment of this application further provides a communication apparatus. The communication apparatus may be a network element in the method embodiment, an apparatus including a network element, or a component that may be used in a network element. It may be understood that, to implement the foregoing functions, the communication apparatus includes a corresponding hardware structure and/or software module that performs each function. A person skilled in the art should be easily aware that units and algorithm steps in the examples described with reference to embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application provides a chip. The chip includes a logic circuit and an input/output interface. The input/output interface is configured to communicate with a module outside the chip. The logic circuit is configured to perform another operation other than a sending/receiving operation on a device including in the foregoing method embodiment.

When the first terminal device is implemented as the terminal device 1, for example, the chip is implemented as a function of the terminal device 1 in FIG. 2a in the foregoing method embodiment. The input/output interface may be configured to perform S203 and S208 on a side of the terminal device 1 in this embodiment of this application, and/or the input/output interface is further configured to perform another receiving/sending step on the side of the terminal device 1 in this embodiment of this application. The logic circuit may be configured to perform other processing steps on the side of the terminal device 1 in this embodiment of this application.

For another example, the chip is implemented as a function of the terminal device 1 in FIG. 3a in the foregoing method embodiment. The input/output interface may be configured to perform S302 on a side of the terminal device 1, and/or the input/output interface is further configured to perform another receiving/sending step on the side of the terminal device 1 in this embodiment of this application. The logic circuit may be configured to perform S301 on the side of the terminal device 1, and/or the logic circuit is further configured to perform other processing steps on the side of the terminal device 1 in this embodiment of this application.

For another example, the chip is implemented as a function of the terminal device 1 in FIG. 4a in the foregoing method embodiment. The input/output interface may be configured to perform S402 on a side of the terminal device 1, and/or the input/output interface is further configured to perform another receiving/sending step on the side of the terminal device 1 in this embodiment of this application. The logic circuit may be configured to perform S401 on the side of the terminal device 1, and/or the logic circuit is further configured to perform other processing steps on the side of the terminal device 1 in this embodiment of this application.

For the first network device, for example, the chip is implemented as a function of the first network device in FIG. 2a in the foregoing method embodiment. The input/output interface may be configured to perform S201, S203, S207, and S208 on a side of the first network device in this embodiment of this application, and/or the input/output interface is further configured to perform another receiving/sending step on the side of the first network device in this embodiment of this application. The logic circuit may be configured to perform S202 on the side of the first network device in this embodiment of this application, and/or the logic circuit is further configured to perform other processing steps on the side of the first network device in this embodiment of this application.

For another example, the chip is implemented as a function of the first network device in FIG. 3a in the foregoing method embodiment. The input/output interface may be configured to perform S302, S303, and S304 on a side of the first network device, and/or the input/output interface is further configured to perform another receiving/sending step on the side of the first network device in this embodiment of this application. The logic circuit may be configured to perform other processing steps on the side of the first network device.

For another example, the chip is implemented as a function of the first network device in FIG. 4a in the foregoing method embodiment. The input/output interface may be configured to perform S402, S403, and S404 on a side of the first network device, and/or the input/output interface is further configured to perform another receiving/sending step on the side of the first network device in this embodiment of this application. The logic circuit may be configured to perform other processing steps on the side of the first network device.

For the third network device, for example, the chip is implemented as a function of the third network device in FIG. 2a in the foregoing method embodiment. The input/output interface may be configured to perform S204 and S206 on a side of the third network device in this embodiment of this application, and/or the input/output interface is further configured to perform another receiving/sending step on the side of the third network device in this embodiment of this application. The logic circuit may be configured to perform S205 on the side of the third network device in this embodiment of this application, and/or the logic circuit is further configured to perform other processing steps on the side of the third network device in this embodiment of this application.

For another example, the chip is implemented as a function of the third network device in FIG. 3a in the foregoing method embodiment. The input/output interface may be configured to perform S305 and S306 on a side of the third network device, and/or the input/output interface is further configured to perform another receiving/sending step on the side of the third network device in this embodiment of this application. The logic circuit may be configured to perform other processing steps on the side of the third network device.

For another example, the chip is implemented as a function of the third network device in FIG. 4a in the foregoing method embodiment. The input/output interface may be configured to perform S405 and S406 on a side of the third network device, and/or the input/output interface is further configured to perform another receiving/sending step on the side of the third network device in this embodiment of this application. The logic circuit may be configured to perform other processing steps on the side of the third network device.

When the fourth terminal device is implemented as the terminal device 2 or the terminal device 3, for example, the chip is implemented as a function of the terminal device 2 in FIG. 2a in the foregoing method embodiment. The input/output interface may be configured to perform S201 on a side of the terminal device 2 in this embodiment of this application, and/or the input/output interface is further configured to perform another receiving/sending step on the side of the terminal device 2 in this embodiment of this application. The logic circuit may be configured to perform other processing steps on the side of the terminal device 2 in this embodiment of this application.

For another example, the chip is implemented as a function of the terminal device 2 in FIG. 3a in the foregoing method embodiment. The input/output interface may be configured to perform S303 on a side of the terminal device 2, and/or the input/output interface is further configured to perform another receiving/sending step on the side of the terminal device 2 in this embodiment of this application. The logic circuit may be configured to perform other processing steps on the side of the terminal device 2.

For another example, the chip is implemented as a function of the terminal device 2 in FIG. 4a in the foregoing method embodiment. The input/output interface may be configured to perform S403 on a side of the terminal device 2, and/or the input/output interface is further configured to perform another receiving/sending step on the side of the terminal device 2 in this embodiment of this application. The logic circuit may be configured to perform other processing steps on the side of the terminal device 2.

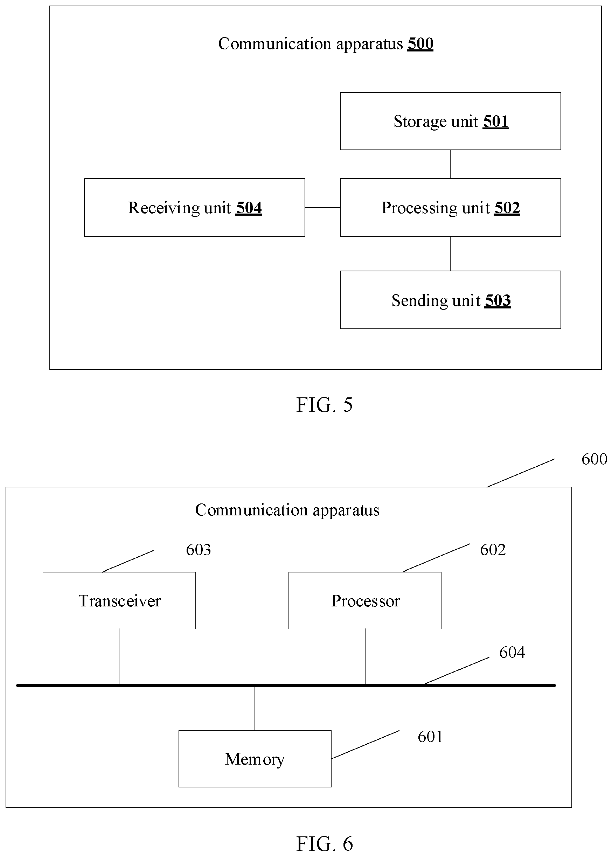

In another possible embodiment, FIG. 5 is a schematic diagram of a structure of a communication apparatus 500. The communication apparatus 500 includes a receiving unit 504, a sending unit 503, and a processing unit 502.

When a first terminal device is implemented as a terminal device 1, for example, the communication apparatus 500 is the terminal device 1 in FIG. 2a in the foregoing method embodiment. The sending unit 503 performs another receiving/sending step on a side of the terminal device 1. The receiving unit 504 performs S203 and S208 on the side of the terminal device 1, and/or the receiving unit 504 is further configured to perform another receiving/sending step on the side of the terminal device 1 in this embodiment of this application. The processing unit 502 may be configured to perform other processing steps on the side of the terminal device 1 in this embodiment of this application.

For another example, the communication apparatus 500 is the terminal device 1 in FIG. 3a in the foregoing method embodiment. The sending unit 503 performs S302 on a side of the terminal device 1, and/or the sending unit 503 is further configured to perform another receiving/sending step on the side of the terminal device 1 in this embodiment of this application. The receiving unit 504 performs another receiving/sending step on the side of the terminal device 1. The processing unit 502 is configured to perform S301 on the side of the terminal device 1, and/or the sending unit 503 is further configured to perform another receiving/sending step on the side of the terminal device 1 in this embodiment of this application.

For another example, the communication apparatus 500 is the terminal device 1 in FIG. 4a in the foregoing method embodiment. The sending unit 503 performs S402 on a side of the terminal device 1, and/or the sending unit 503 is further configured to perform another receiving/sending step on the side of the terminal device 1 in this embodiment of this application. The receiving unit 504 performs another receiving/sending step on the side of the terminal device 1. The processing unit 502 is configured to perform S401 on the side of the terminal device 1, and/or the sending unit 503 is further configured to perform another receiving/sending step on the side of the terminal device 1 in this embodiment of this application.

For a first network device, for example, the communication apparatus 500 is the first network device in FIG. 2a in the foregoing method embodiment. The sending unit 503 performs S203 and S208 on a side of the first network device, and/or the sending unit 503 is further configured to perform another receiving/sending step on the side of the first network device in this embodiment of this application. The receiving unit 504 performs S201 and S207 on the side of the first network device, and/or the receiving unit 504 is further configured to perform another receiving/sending step on the side of the first network device in this embodiment of this application. The processing unit 502 is configured to perform S202 on the side of the first network device in this embodiment of this application, and/or the processing unit 502 is further configured to perform other processing steps on the side of the first network device in this embodiment of this application.

For another example, the communication apparatus 500 is the first network device in FIG. 3a in the foregoing method embodiment. The sending unit 503 performs S303 and S304 on a side of the first network device, and/or the sending unit 503 is further configured to perform another receiving/sending step on the side of the first network device in this embodiment of this application. The receiving unit 504 performs S302 on the side of the first network device, and/or the sending unit 503 is further configured to perform another receiving/sending step on the side of the first network device in this embodiment of this application. The processing unit 502 is configured to perform another receiving/sending step on the side of the first network device in this embodiment of this application.

For another example, the communication apparatus 500 is the first network device in FIG. 4a in the foregoing method embodiment. The sending unit 503 performs S403 and S404 on a side of the first network device, and/or the sending unit 503 is further configured to perform another receiving/sending step on the side of the first network device in this embodiment of this application. The receiving unit 504 performs S402 on the side of the first network device, and/or the sending unit 503 is further configured to perform another receiving/sending step on the side of the first network device in this embodiment of this application. The processing unit 502 is configured to perform another receiving/sending step on the side of the first network device in this embodiment of this application.

For a third network device, for example, the communication apparatus 500 is the third network device in FIG. 2a in the foregoing method embodiment. The sending unit 503 performs S206 on a side of the third network device, and/or the sending unit 503 is further configured to perform another receiving/sending step on the side of the third network device in this embodiment of this application. The receiving unit 504 performs S204 on the side of the third network device, and/or the receiving unit 504 is further configured to perform another receiving/sending step on the side of the third network device in this embodiment of this application. The processing unit 502 is configured to perform S205 on the side of the third network device in this embodiment of this application, and/or the processing unit 502 is further configured to perform other processing steps on the side of the third network device in this embodiment of this application.

For another example, the communication apparatus 500 is the third network device in FIG. 3a in the foregoing method embodiment. The sending unit 503 performs S306 on a side of the third network device, and/or the sending unit 503 is further configured to perform another receiving/sending step on the side of the third network device in this embodiment of this application. The receiving unit 504 performs S305 on the side of the third network device, and/or the sending unit 503 is further configured to perform another receiving/sending step on the side of the third network device in this embodiment of this application. The processing unit 502 is configured to perform another receiving/sending step on the side of the third network device in this embodiment of this application.

For another example, the communication apparatus 500 is the third network device in FIG. 4a in the foregoing method embodiment. The sending unit 503 performs S406 on a side of the third network device, and/or the sending unit 503 is further configured to perform another receiving/sending step on the side of the third network device in this embodiment of this application. The receiving unit 504 performs S405 on the side of the third network device, and/or the sending unit 503 is further configured to perform another receiving/sending step on the side of the third network device in this embodiment of this application. The processing unit 502 is configured to perform another receiving/sending step on the side of the third network device in this embodiment of this application.

When a fourth terminal device is implemented as a terminal device 2 or a terminal device 3, for example, the communication apparatus 500 is the terminal device 2 in FIG. 2a in the foregoing method embodiment. The sending unit 503 performs another receiving/sending step on a side of the terminal device 2. The receiving unit 504 performs S201 on the side of the terminal device 2, and/or the receiving unit 504 is further configured to perform another receiving/sending step on the side of the terminal device 2 in this embodiment of this application. The processing unit 502 may be configured to perform other processing steps on the side of the terminal device 2 in this embodiment of this application.

For another example, the communication apparatus 500 is the terminal device 2 in FIG. 3a in the foregoing method embodiment. The sending unit 503 performs another receiving/sending step on a side of the terminal device 2. The receiving unit 504 performs S303 on the side of the terminal device 2, and/or the receiving unit 504 is further configured to perform another receiving/sending step on the side of the terminal device 2 in this embodiment of this application. The processing unit 502 may be configured to perform another receiving/sending step on the side of the terminal device 2 in this embodiment of this application.

For another example, the communication apparatus 500 is the terminal device 2 in FIG. 4a in the foregoing method embodiment. The sending unit 503 performs another receiving/sending step on a side of the terminal device 2. The receiving unit 504 performs S403 on the side of the terminal device 2, and/or the sending unit 503 is further configured to perform another receiving/sending step on the side of the terminal device 2 in this embodiment of this application. The processing unit 502 may be configured to perform another receiving/sending step on the side of the terminal device 2 in this embodiment of this application.

All related content of each step in the foregoing method embodiment may be cited in function descriptions of a corresponding function module. Details are not described herein again.

It should be understood that the processing unit 502 in this embodiment of this application may be implemented by a processor or a processor-related circuit component, the sending unit 503 may be implemented by a transmitter or a transmitter-related circuit component, and the receiving unit 504 may be implemented by a receiver or a receiver-related circuit component.

Optionally, the communication apparatus 500 may further include a storage unit 501, configured to store program code and data of the communication apparatus 500. The data may include but is not limited to original data or intermediate data.

The processing unit 502 may be a processor or a controller, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit 502 may implement or execute various example logical blocks, modules, and circuits described with reference to content disclosed in this application. Alternatively, the processor may be a combination for implementing a computing function, for example, a combination including one or more microprocessors, or a combination of a DSP and a microprocessor.

The sending unit 503 may be a communication interface, a transmitter, a transmitter circuit, or the like. The receiving unit 504 may be a communication interface, a receiver, a receiver circuit, or the like. The communication interface is a general term. In specific implementation, the communication interface may include a plurality of interfaces.

The storage unit 501 may be a memory.

When the processing unit 502 is a processor, the sending unit 503 is a transceiver, the receiving unit 504 is the transceiver, and the storage unit 501 is a memory, the communication apparatus 600 in this embodiment of this application may be shown in FIG. 6.

Refer to FIG. 6. A communication apparatus 600 includes a processor 602, a transceiver 603, and a memory 601.

The transceiver 603 may be an independent transmitter, and the transmitter may be configured to send information to another device. Alternatively, the transceiver may be an independent receiver, configured to receive information from another device. Alternatively, the transceiver may be a component integrating functions of sending and receiving information. A specific implementation of the transceiver is not limited in this embodiment of this application.

Optionally, the communication apparatus 600 may further include a bus 604. The transceiver 603, the processor 602, and the memory 601 may be connected to each other through the bus 604. The bus 604 may be a peripheral component interconnect (peripheral component interconnect, PCI) bus, an extended industry standard architecture (extended industry standard architecture, EISA) bus, or the like. The bus 604 may include an address bus, a data bus, a control bus, and the like. For ease of representation, only one bold line is used for representation in FIG. 6, but this does not mean that there is only one bus or only one type of bus.

A person of ordinary skill in the art may understand that all or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the processes or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid state disk (Solid State Disk, SSD)), or the like.

In the several embodiments provided in this application, it should be understood that the disclosed system, apparatus, and method may be implemented in other manners. For example, the described apparatus embodiment is merely an example. For example, division of the units is merely logical function division, and may be other division during actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical or other forms.

The units described as separate parts may or may not be physically separate, and parts displayed as units may or may not be physical units, and may be located at one location or distributed on a plurality of network devices. Some or all of the units may be selected based on an actual requirement to achieve the objective of the solution of this embodiment.

In addition, function units in embodiments of this application may be integrated into one processing unit, each of the function units may exist alone physically, or two or more units are integrated into one unit. The integrated unit may be implemented in a form of hardware, or may be implemented as a combination of hardware and a software function unit.

Based on the foregoing descriptions of the implementations, a person skilled in the art may clearly understand that this application may be implemented by software in addition to necessary universal hardware or by hardware only. In most cases, the former is a preferred implementation. Based on such an understanding, the technical solutions in this application essentially or the part contributing to the conventional technology may be implemented in a form of a software product. The computer software product is stored in a readable storage medium, such as a floppy disk, a hard disk, or an optical disc of a computer, and includes several instructions for instructing a computer device (which may be a personal computer, a server, a network device, or the like) to perform the method described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A collective communication method, comprising:
receiving, by a first terminal device, at least one second packet from a first network device, wherein the second packet comprises information about a first process and information about a network device corresponding to the first process, the first process is used to execute a first task, and the information about the network device corresponding to the first process is information about a network device to which a terminal device comprising the first process belongs;
determining, by the first terminal device, a third packet based on the at least one second packet, wherein the third packet comprises information about a target network device and information about all first processes that correspond to the target network device and that execute the first task, and the target network device is at least one of network devices corresponding to the first task; and
sending, by the first terminal device, the third packet to the first network device.

2. The method according to claim 1, wherein the target network device is all the network devices corresponding to the first task; and the determining, by the first terminal device, a third packet based on the at least one second packet comprises:
when a number of the at least one second packet is a target value, determining, by the first terminal device, the third packet based on the at least one second packet, wherein the target value indicates a number of all terminal devices comprising the first process for executing the first task.

3. The method according to claim 1, wherein the target network device is one of the network devices corresponding to the first task; and the determining, by the first terminal device, a third packet based on the at least one second packet comprises:
when a number of the at least one second packet is a target value, determining, by the first terminal device, the third packet based on a target packet in the at least one second packet, wherein the target value indicates a number of all terminal devices comprising the first process for executing the first task, and the target packet belongs to the at least one second packet, and carries information about a same target network device.

4. The method according to any one of claims 1 to 3, wherein the third packet further comprises first information, the first information comprises at least one number value, and the number value is consistent in number with and in a one-to-one correspondence to the target network device; and
a first number value indicates a number of terminal devices that are in a terminal device set and that are deployed with the first process for executing the first task, the first number value is one of the at least one number value, and the terminal device in the terminal device set belongs to a target network device corresponding to the first number value.

5. The method according to any one of claims 1 to 4, wherein the third packet further comprises second information, and the second information indicates that a type of the third packet is a notification packet.

6. The method according to claim 5, wherein the second information comprises a first field in the third packet, and a value of the first field in the third packet is a first preset value.

7. The method according to any one of claims 1 to 6, wherein the second packet further comprises third information, and the third information indicates that the second packet comprises the information about the network device corresponding to the first process.

8. The method according to claim 7, wherein the third information comprises a second field in the second packet, and a value of the second field in the second packet is a second preset value.

9. The method according to any one of claims 1 to 8, wherein the second packet further comprises fourth information, and the fourth information indicates that a type of the second packet is a query packet.

10. The method according to claim 9, wherein the fourth information comprises a first field in the second packet, and a value of the first field in the second packet is a third preset value.

11. The method according to any one of claims 1 to 10, wherein the third packet satisfies a protocol format of remote direct memory access over converged Ethernet RoCE; and/or
the second packet satisfies the protocol format of RoCE.

12. A collective communication method, comprising:
sending, by a fourth terminal device, a first packet to a fourth network device, wherein the first packet comprises at least information about a first process, the first process is deployed on the fourth terminal device, and the first process is used to execute a first task; and
receiving, by the fourth terminal device, a third packet from the fourth network device, wherein the third packet comprises at least information about the fourth network device and information about all first processes that correspond to the fourth network device and that execute the first task.

13. The method according to claim 12, wherein the third packet further comprises information about a fifth network device and information about all first processes that correspond to the fifth network device and that execute the first task; and
the fifth network device is all network devices, except the fourth network device, in network devices corresponding to the first task.

14. The method according to claim 12 or 13, wherein the third packet further comprises first information, the first information comprises at least one number value, and the number value is consistent in number with and in a one-to-one correspondence to the network devices corresponding to the first task; and
a first number value indicates a number of terminal devices that are in a terminal device set and that are deployed with the first process for executing the first task, the first number value is one of the at least one number value, and the terminal device in the terminal device set belongs to a network device corresponding to the first number value.

15. The method according to any one of claims 12 to 14, wherein the third packet further comprises second information, and the second information indicates that a type of the third packet is a notification packet.

16. The method according to claim 15, wherein the second information comprises a first field in the third packet, and a value of the first field in the third packet is a first preset value.

17. The method according to any one of claims 12 to 16, wherein the first packet comprises fifth information, and the fifth information indicates that the first packet does not carry the information about the fourth network device.

18. The method according to claim 17, wherein the fifth information comprises a second field in the first packet, and a value of the second field in the first packet is a fourth preset value.

19. The method according to any one of claims 12 to 16, wherein the first packet further comprises the information about the fourth network device.

20. The method according to any one of claims 12 to 19, wherein the first packet further comprises sixth information, and the sixth information indicates that a type of the first packet is a query packet.

21. The method according to claim 20, wherein the sixth information comprises a first field in the first packet, and a value of the first field in the first packet is a third preset value.

22. The method according to any one of claims 12 to 21, wherein the third packet satisfies a protocol format of remote direct memory access over converged Ethernet RoCE; and/or
the first packet satisfies the protocol format of RoCE.

23. A communication apparatus, comprising a sending unit, a receiving unit, and a processing unit, wherein
the receiving unit is configured to receive at least one second packet from a first network device, wherein the second packet comprises information about a first process and information about a network device corresponding to the first process, the first process is used to execute a first task, and the information about the network device corresponding to the first process is information about a network device to which a terminal device comprising the first process belongs;
the processing unit is configured to determine a third packet based on the at least one second packet, wherein the third packet comprises information about a target network device and information about all first processes that correspond to the target network device and that execute the first task, and the target network device is at least one of network devices corresponding to the first task; and
the sending unit is configured to send the third packet to the first network device.

24. The apparatus according to claim 23, wherein the target network device is all the network devices corresponding to the first task; and that the processing unit is configured to determine the third packet based on the at least one second packet comprises: when a number of the at least one second packet is a target value, determining the third packet based on the at least one second packet, wherein the target value indicates a number of all terminal devices comprising the first process for executing the first task.

25. The apparatus according to claim 23, wherein the target network device is one of the network devices corresponding to the first task; and that the processing unit is configured to determine the third packet based on the at least one second packet comprises:
when a number of the at least one second packet is a target value, determining the third packet based on a target packet in the at least one second packet, wherein the target value indicates a number of all terminal devices comprising the first process for executing the first task, and the target packet belongs to the at least one second packet, and carries information about a same target network device.

26. The apparatus according to any one of claims 23 to 25, wherein the third packet further comprises first information, the first information comprises at least one number value, and the number value is consistent in number with and in a one-to-one correspondence to the target network device; and
a first number value indicates a number of terminal devices that are in a terminal device set and that are deployed with the first process for executing the first task, the first number value is one of the at least one number value, and the terminal device in the terminal device set belongs to a target network device corresponding to the first number value.

27. The apparatus according to any one of claims 23 to 26, wherein the third packet further comprises second information, and the second information indicates that a type of the third packet is a notification packet.

28. The apparatus according to claim 27, wherein the second information comprises a first field in the third packet, and a value of the first field in the third packet is a first preset value.

29. The apparatus according to any one of claims 23 to 28, wherein the second packet further comprises third information, and the third information indicates that the second packet comprises the information about the network device corresponding to the first process.

30. The apparatus according to claim 29, wherein the third information comprises a second field in the second packet, and a value of the second field in the second packet is a second preset value.

31. The apparatus according to any one of claims 23 to 30, wherein the second packet further comprises fourth information, and the fourth information indicates that a type of the second packet is a query packet.

32. The apparatus according to claim 31, wherein the fourth information comprises a first field in the second packet, and a value of the first field in the second packet is a third preset value.

33. The apparatus according to any one of claims 23 to 32, wherein the third packet satisfies a protocol format of remote direct memory access over converged Ethernet RoCE; and/or
the second packet satisfies the protocol format of RoCE.

34. A communication apparatus, comprising a sending unit and a receiving unit, wherein
the sending unit is configured to send a first packet to a fourth network device, wherein the first packet comprises at least information about a first process, the first process is deployed on the communication apparatus, and the first process is used to execute a first task; and
the receiving unit is configured to receive a third packet from the fourth network device, wherein the third packet comprises at least information about the fourth network device and information about all first processes that correspond to the fourth network device and that execute the first task.

35. The apparatus according to claim 34, wherein the third packet further comprises information about a fifth network device and information about all first processes that correspond to the fifth network device and that execute the first task; and
the fifth network device is all network devices, except the fourth network device, in network devices corresponding to the first task.

36. The apparatus according to claim 34 or 35, wherein the third packet further comprises first information, the first information comprises at least one number value, and the number value is consistent in number with and in a one-to-one correspondence to the network devices corresponding to the first task; and
a first number value indicates a number of terminal devices that are in a terminal device set and that are deployed with the first process for executing the first task, the first number value is one of the at least one number value, and the terminal device in the terminal device set belongs to a network device corresponding to the first number value.

37. The apparatus according to any one of claims 34 to 36, wherein the third packet further comprises second information, and the second information indicates that a type of the third packet is a notification packet.

38. The apparatus according to claim 37, wherein the second information comprises a first field in the third packet, and a value of the first field in the third packet is a first preset value.

39. The apparatus according to any one of claims 34 to 38, wherein the first packet comprises fifth information, and the fifth information indicates that the first packet does not carry the information about the fourth network device.

40. The apparatus according to claim 39, wherein the fifth information comprises a second field in the first packet, and a value of the second field in the first packet is a fourth preset value.

41. The apparatus according to any one of claims 34 to 38, wherein the first packet further comprises the information about the fourth network device.

42. The apparatus according to any one of claims 34 to 41, wherein the first packet further comprises sixth information, and the sixth information indicates that a type of the first packet is a query packet.

43. The apparatus according to claim 42, wherein the sixth information comprises a first field in the first packet, and a value of the first field in the first packet is a third preset value.

44. The apparatus according to any one of claims 34 to 43, wherein the third packet satisfies a protocol format of remote direct memory access over converged ethernet RoCE; and/or
the first packet satisfies the protocol format of RoCE.

45. A communication apparatus, comprising a processor and a memory, wherein the processor is coupled to the memory, the memory stores program instructions, and when the program instructions stored in the memory are executed by the processor, the collective communication method according to any one of claims 1 to 11 is performed.

46. A chip, wherein the chip comprises a logic circuit and an input/output interface, the input/output interface is configured to communicate with a module outside the chip, and the logic circuit is configured to run a computer program or instructions, to control a first terminal device to perform the collective communication method according to any one of claims 1 to 11.

47. A communication apparatus, comprising a processor and a memory, wherein the processor is coupled to the memory, the memory stores program instructions, and when the program instructions stored in the memory are executed by the processor, the collective communication method according to any one of claims 12 to 22 is performed.

48. A chip, wherein the chip comprises a logic circuit and an input/output interface, the input/output interface is configured to communicate with a module outside the chip, and the logic circuit is configured to run a computer program or instructions, to control a fourth terminal device to perform the collective communication method according to any one of claims 12 to 22.

49. A computer-readable storage medium, wherein the computer-readable storage medium stores a program, and when the program is invoked by a processor, the collective communication method according to any one of claims 1 to 11 is performed, or the collective communication method according to any one of claims 12 to 22 is performed.
